(19) Europäisches Patentamt
European Patent Office
Office européen des brevets

(11) **EP 1 257 048 B1**

(12) **EUROPÄISCHE PATENTSCHRIFT**

(45) Veröffentlichungstag und Bekanntmachung des Hinweises auf die Patenterteilung:
**04.10.2017 Patentblatt 2017/40**

(51) Int Cl.:
*H02M 3/335* $^{(2006.01)}$ *H02M 7/523* $^{(2006.01)}$

(21) Anmeldenummer: **02100456.9**

(22) Anmeldetag: **07.05.2002**

(54) **Regelvorrichtung für einen resonanten Konverter**

Regulation device for a resonant converter

Dispositif de régulation pour convertisseur résonant

(84) Benannte Vertragsstaaten:
**AT BE CH CY DE DK ES FI FR GB GR IE IT LI LU MC NL PT SE TR**

(30) Priorität: **09.05.2001 DE 10122534**
**04.09.2001 DE 10143251**

(43) Veröffentlichungstag der Anmeldung:
**13.11.2002 Patentblatt 2002/46**

(73) Patentinhaber: **Philips Lighting Holding B.V.**
**5656 AE Eindhoven (NL)**

(72) Erfinder: **Elferich, Reinhold,**
**Philips Corp. Int. Prop. Gmbh**
**52066, Aachen (DE)**

(74) Vertreter: **Verweij, Petronella Daniëlle et al**
**Philips Lighting B.V.**
**Philips Lighting Intellectual Property**
**High Tech Campus 45**
**5656 AE Eindhoven (NL)**

(56) Entgegenhaltungen:
EP-A- 0 355 415        EP-A- 0 720 278
WO-A-00/69059         DE-A- 3 912 849
DE-A- 19 711 817      US-A- 4 628 426
US-A- 4 677 534        US-A- 5 619 403
US-A- 6 018 467

- **PATENT ABSTRACTS OF JAPAN Bd. 1997, Nr. 02, 28. Februar 1997 (1997-02-28) & JP 08 266050 A (CANON INC.), 11. Oktober 1996 (1996-10-11)**
- **PATENT ABSTRACTS OF JAPAN Bd. 2000, Nr. 13, 5. Februar 2001 (2001-02-05) & JP 2000 295783 A (HITACHI KOKI), 20. Oktober 2000 (2000-10-20)**

**Beschreibung**

Die Erfindung betrifft einen resonanten Konverter mit einer Regeleinrichtung, ein Regelverfahren für einen resonanten Konverter und ein Schaltnetzteil.

US5619403 und WO0069059 beschreiben Beispiele aus dem Stand der Technik.

Ein geschalteter Konverter formt eine eingangsseitige Gleichspannung in eine oder mehrere ausgangsseitige Gleichspannungen um, indem die eingangsseitige Gleichspannung zunächst zerhackt, d. h. in eine geschaltete Wechselspannung umgeformt wird und mit dieser geschalteten Wechselspannung eine Resonanzanordnung mit mindestens einer Kapazität gespeist wird, die die Primärseite eines Transformators umfasst. Sekundärseitig umfasst der Transformator eine oder mehrere Wicklungen, deren Spannungen zur Erzeugung von Ausgangsgleichspannungen gleichgerichtet werden.

Bekannte Schaltnetzteile umfassen eine Netzteileingangsschaltung zum Anschluss an das Stromversorgungsnetz und einen geschalteten Konverter. Die Netzteileingangsschaltung stellt eine Zwischenkreisgleichspannung zur Verfügung durch die der geschaltete Konverter gespeist wird. Die Zwischenkreisgleichspannung wird durch den Konverter in eine oder mehrere Ausgangsgleichspannungen umgeformt.

Es sind eine Vielzahl von Schaltungen für geschaltete Konverter bekannt. Dies umfasst außer resonanten Konvertern auch Schaltungen, bei denen keine Resonanzanordnung verwendet wird. Mit geschalteten Konvertern lassen sich kostengünstige, kleine und leichte Stromversorgungsgeräte/Schaltnetzteile herstellen, die beispielsweise in Konsumelektronik-geräten wie Set-Top-Boxen, Satelliten-Receivern, Fernsehgeräten, Computermonitoren, Videorecordern, Compact-Audioanlagen etc. vorteilhaft einsetzbar sind. Bei diesen Anwendungen werden häufig Konverter benötigt, die aus einer Eingangsgleichspannung mehrere Ausgangsspannungen erzeugen.

Üblicherweise wird mindestens eine der Ausgangsspannungen auf einen Soll-Wert geregelt. Bei Konvertern des Standes der Technik, die mehrere Ausgangsspannungen liefern, wobei jeder der Ausgangsspannungen eine Sekundärwicklung des Transformators zugeordnet ist, können verschiedene Ausgangsspannungen nicht unabhängig voneinander geregelt werden. Bei solchen Schaltungen ist eine Regelvorrichtung nur für eine der Ausgangsspannungen vorgesehen. Es wird hierbei davon ausgegangen, dass die anderen Spannungen - die über das Verhältnis der Windungszahlen mit der einen geregelten Spannung zusammenhängen - mit dieser "mitgeregelt" werden. Dies hat bei stark unterschiedlicher Belastung an den einzelnen Ausgängen jedoch große Nachteile

Eine bekannte Topologie eines Konverters umfasst den sog. lastresonanten Konverter. Bei einer bekannten Schaltung hierfür wird als Wechselrichter eine mit einer Gleichspannung gespeiste Halbbrücke verwendet, die eine Reihenschaltung aus einer Resonanzkapazität und der Primärseite eines Transformators speist. Die Resonanzkapazität bildet gemeinsam mit der Streuinduktivität des Transformators sowie ggfs. weiteren, auch sekundärseitig angeordneten Induktivitäten oder Kapazitäten eine Resonanzanordnung, Sekundärseitig besitzt der lastresonante Konverter eine oder mehrere Sekundärwindungen. So wird eine Anzahl von Ausgangsgleichspannungen geliefert, die üblicherweise nach Gleichrichtung noch mindestens mit einem kapazitiven Filter gefiltert werden.

Zur Regelung der Ausgangsspannung eines solchen resonanten Konverters ist es bekannt, die Ansteuerung des Wechselrichters zu verändern. Die Schalter des Wechselrichters werden hierbei so gesteuert, dass eine Wechselspannung, in vielen Fällen eine pulsweitenmodulierte Spannung, mit vorgegebenen Parametern (z B. Frequenz) erzeugt wird. Durch Variation der Frequenz dieser Spannung kann der Betrag der Ausgangaspannung geregelt werden. Hierbei erhöht sich die Ausgangsspannung, je näher die Frequenz der an die Resonanzfrequenz der Resonanzanordnung heranrückt. Für LLC-Konverter ist ein Betrieb im überkritischen Bereich üblich, d. h. Speisung der Resonanzanordnung mit einer Spannung, deren Frequenz oberhalb der Resonanzfrequenzen liegt. In diesem Betriebsfall kann die Ausgangsspannung erhöht werden, indem die Frequenz der Spannung verringert wird. Bei bekannten lastresonanten Konvertern kann hierbei nur eine Ausgangsspannung direkt geregelt werden. Weitere Ausgangsspannungen sind mit der direkt geregelten Ausgangsspannung über das Verhältnis der Windungszahlen gekoppelt und werden so "mitgeregelt".

Der in Konsumelektronikgeräten dominierende Konvertertyp ist der Sperrwandler (Flyback-Konverter). Hierbei handelt es sich um einen nicht resonant aufgebauten Wandler. Primärseitig wird als Wechselrichter in der Regel nur ein Schaltelement benötigt. An jedem seiner Ausgänge sieht der Sperrwandler Einweg-Gleichrichtung vor. Einer der Ausgänge ist unmittelbar regelbar.

Falls beim Sperrwandler eine zweite Ausgangsspannung benötigt wird, die unmittelbar geregelt sein muss, ist es bekannt, an einem der Ausgänge des Sperrwandlers einen weiteren Konverter, bezeichnet als Stepdown-Konverter oder Buck-Konverter, anzuschließen, der durch die Ausgangsspannung des ersten Sperrwandlers gespeist wird und die zweite Ausgangsspannung mit einer separaten Regelung liefert. Eine solche Schaltung mit zwei Wandlern ist aber sehr aufwendig.

Eine andere Erweiterung der Sperrwandler-Topologie, die zwei geregelte Ausgangsspannungen zur Verfügung stellt, ist der sog. "Double forward-flyback"-Konverter. Eine entsprechende Topologie ist beispielsweise beschrieben in IEEE-PESC 1988, Seite 142 "A Complete Study of the Double Forward - Flyback Converter" von J. Sebastian et. al.. Wie bei der zugrundeliegenden Flyback-Topologie handelt es sich nicht um eine resonante Anordnung, sondern die primärseitige Wechselspannung, die mit einem einfachen Schalter erzeugt wird, speist direkt die Primärseite des Transformators. Sekundärseitig sind hier zwei Sekundäreinheiten, jeweils gebildet aus einer Sekundärwicklung des Transformators und einem Einweg-Gleichrichtelement (Diode) vorgesehen. Die hiervon gelieferten Sekundärspannungen werden bei einer Sekundäreinheit kapazitiv und bei der anderen Sekundäreinheit induktiv gefiltert. So ist es möglich, eine (induktiv gefilterte) Ausgangsspannung über den Tastgrad der pulsweitenmodulierten Spannung und die andere (kapazitiv gefilterte) Ausgangsspannung über die Frequenz der pulsweitenmodulierten Spannung zu regeln. Allerdings weist diese "hart schaltende" Topologie erhebliche Schaltverluste auf.

Bei modernen Konsumelektronikgeräten ist es immer häufiger notwendig, dass zwei Versorgungsspannungen getrennt voneinander regelbar sind

Es ist daher Aufgabe der Erfindung, einen resonanten Konverter und ein Regelverfahren anzugeben, das kostengünstig realisiert werden kann und trotzdem die Möglichkeit zur getrennten Regelung von mehreren Ausgangsspannungen bietet.

Diese Aufgabe wird gelöst durch einen resonanten Konverter nach Anspruch 1 und ein Regelverfahren nach Anspruch 11 sowie ein Schaltnetzteil nach Anspruch 12. Abhängige Ansprüche beziehen sich auf vorteilhafte Ausführungsformen der Erfindung.

Erfindungsgemäß wird eine resonante Topologie vorgeschlagen, d. h. durch einen Wechselrichter wird eine Resonanzanordnung gespeist, die einen Serienkondensator und die Primärseite eines Transformators umfasst. Auch weitere, sekundärseitige Elemente können Teil der Resonanzanordnung sein. Bei einer solchen resonanten Topologie kann die Ausgangsspannung über die Frequenz der primärseitigen Wechselspannung geregelt werden. Durch überkritischen Betrieb kann bei einem solchen resonanten Konverter erreicht werden, dass sich die Resonanzanordnung an der Quelle wie eine induktive Last verhält, so dass ein Schalten ohne Verluste ("zero voltage switching") möglich ist.

Die getrennte Regelung unterschiedlicher Ausgangsspannungen wird erfindungsgemäß dadurch ermöglicht, dass zwei Arten von Sekundäreinheiten vorgesehen sind, gebildet jeweils aus einer Sekundärwicklung des Transformators und mindestens einem Gleichrichtelement. Eine erste Sekundäreinheit (bzw. ein erster Typ von Sekundäreinheiten) und eine zweite Sekundäreinheit (bzw. ein zweiter Typ von Sekundäreinheiten) sind hierbei entgegengesetzt orientiert. Unter der Orientierung wird hierbei die Wicklungsorientierung im Zusammenhang mit der Beschaltung mit dem Gleichrichtelement verstanden. Als Beispiel können sich zwei Sekundäreinheiten entgegengesetzten Typs dadurch unterscheiden, dass bei ansonsten gleicher Beschaltung die Wicklungsorientierung auf dem gemeinsamen Transformatorkern entgegengesetzt ist. Ebenso ist es möglich, bei gleicher Wicklungsorientierung zweier Sekundärwicklungen die Sekundäreinheit ersten und zweiten Typs durch jeweils umgekehrte Beschaltung zu unterscheiden. Unter Beschaltung wird der Anschluss des Gleichrichtelements verstanden, bei dem es sich bevorzugt um ein lediglich in einem Zweig eingebrachtes Einweg-Gleichrichtelement, beispielsweise eine Diode, handelt.

Durch die Unterscheidung in zwei gegensätzlich orientierte Typen von Sekundäreinheiten verhalten sich je nach Anregung die beiden Sekundäreinheiten unterschiedlich. Beim Betrieb mit einer Wechselspannung werden die Sekundäreinheiten ersten und zweiten Typs aufeinanderfolgend bestromt. Hierbei fließt im Wesentlichen während eines positiven Spannungshubs an der Primärseite des Transformators ein Strom durch die Sekundäreinheit ersten Typs. Während des negativen Spannungshubs an der Primärseite des Transformators fließt entsprechend ein Strom durch die Sekundäreinheit zweiten Typs. Wie nachfolgend im Detail erläutert wird, ist es möglich, diese Unterscheidung gezielt zu nutzen, wobei durch entsprechende gezielte Anregung mehr oder weniger Leistung von einer Sekundäreinheit ersten oder zweiten Typs geliefert wird.

Die Sekundäreinheiten können galvanisch voneinander getrennt sein. Es ist aber auch möglich, dass zwei Sekundäreinheiten einen gemeinsamen Abgriff aufweisen.

Durch Gleichrichtung an dem Gleichrichtelement entstehen an den Sekundäreinheiten Sekundärspannungen. Diese können - üblicherweise nach (bevorzugt kapazitiver) Filterung - direkt als Ausgangsspannung verwendet werden. Ein solcher Ausgang, bei dem eine Sekundäreinheit alleine den Ausgang speist, wird hier als "direkter Ausgang" bezeichnet. Es kann aber auch vorgesehen sein, dass ein "Stapel-Ausgang" verwendet wird, dessen Ausgangsspannung über eine oder mehrere Sekundärspannungen einer Sekundäreinheit ersten Typs und eine oder mehrere Sekundärspannungen von Sekundäreinheiten zweiten Typs, die z. B. in Reihe geschaltet sind, abfällt. Beispiele für derartige Topologien sind nachfolgend anhand der Figuren erläutert.

Die erfindungsgemäße Regeleinrichtung regelt mittels der Ansteuerung des Wechselrichters sowohl die erste als auch die zweite Ausgangsspannung jeweils auf einen Soll-Wert. Der Wechselrichter liefert eine geschaltete Wechselspannung, bevorzugt eine pulsweitenmodulierte Spannung von üblicherweise konstanter Amplitude. Zur getrennten Regelung der beiden Ausgangsspannungen werden zwei Stellgrößen verwendet, die den Zeitverlauf der pulsweitenmodulierten Spannung vorgeben. Verschiedene Vorschläge sehen hierfür einerseits die Vorgabe von Schaltfrequenz und Tastgrad der pulsweitenmodulierten Spannung vor, andererseits die jeweilige Vorgabe der Einschaltzeiten für den positiven und negativen Spannungspuls.

Bevorzugt wird ein Modulator verwendet, der ausgehend von Vorgaben der Regelvorrichtung den Wechselrichter ansteuert, indem ein Pulssignal zur Ansteuerung der Schalter des Wechselrichters vorgegeben wird. Als Wechselrichter wird besonders bei geringen Leistungen aus Kostengründen eine Halbbrücke bevorzugt, mit der aus einer Eingangsgleichspannung durch wechselseitiges Schalten zweier Schalter Spannungspulse erzeugt werden. Ebenso ist der Einsatz einer Vollbrücke denkbar.

Ein allgemeines Modell, mit dem für verschiedene Topologien jeweils Regelungen zusammengefasst sind, ist im Zusammenhang mit den Figuren unten erläutert. Nachfolgend wird auf einige Weiterbildungen der Erfindung, die sich auf konkrete Regelungen beziehen, eingegangen.

Gemäß einem ersten Vorschlag werden zur getrennten Regelung zweier Ausgangsspannungen für beide Ausgangsspannungen zunächst Regelfehlergrößen ermittelt. Dies umfasst die Bildung der Regeldifferenz und bevorzugt auch eine Normierung. Eine solche Normierung ist insbesondere dann vorteilhaft, wenn die beiden Spannungen erheblich voneinander differieren. Weiter wird aus den Regelfehlergrößen eine Summen- und eine Differenzgröße ermittelt, wobei die Summengröße von der Summe der Regelfehlergrößen und die Differenzgröße von der Differenz der Regelfehlergrößen abhängt. Unter "abhängt" wird hierbei verstanden, dass gegebenenfalls weitere Operationen, beilspielsweise Normierungen oder andere Operationen auf die einzelnen Größen oder auf die Summe bzw. Differenz angewindet werden können. Summen- und Differenzgrößen können auch direkt gleich der Summe der Differenz der Regelfehlergrößen sein. Schließlich wird durch die Summengröße die Frequenz und durch die Differenzgröße der Tastgrad der pulsweitenmodulierten Spannung vorgegeben, wobei bevorzugt jeweils eindimensional Regeleinheiten, beilspielsweise I-, PI- oder PID-Regler verwendet werden.

Gemäß einem zweiten Vorschlag werden zwei Spannungen getrennt voneinander geregelt, indem zunächst wie oben beschrieben Regelfehlergrößen für beide zu regelnden Ausgangsspannungen ermittelt werden. Aus der ersten Regelfehlergröße wird - bevorzugt durch einen eindimensionalen Regler, beispielsweise PID-Regler - ein Vorgabewert für die Dauer eines ersten positiven Spannungspulses der pulsweitenmodulierten Spannung ermittelt und aus der zweiten Regelfehlergröße ein Vorgabewert für die Dauer eines negativen Spannungspulses (bei Verwindung einer Vollbrücke) bzw. die Dauer, in der der Wert der pulsweitenmodulierten Spannung gleich Null ist (bei Verwendung einer Halbbrücke). Bevorzugt wird diese Regelung kombiniert mit der Vorgabe einer Mindest- und/oder Höchstdauer für die jeweiligen Spannungspulse, um einen Arbeitsbereich für die Schaltfrequenz festzulegen. In einem überkritischen Bereich, d h Betrieb mit einer Schaltfrequenz oberhalb der Resonanzfrequenz(en) der Resonanzanordnung ist hierbei die Zuordnung so zu wählen, dass durch Stellung der Dauer des positiven Spannungspulses die Sekundärspannungen der Sekundäreinheiten zweiten Typs (die im Wesentlichen während des negativen Spannungspulses bestromt werden!) geregelt werden und umgekehrt.

Regeleinheiten zur Realisierung der genannten Vorschläge können auf viele verschiedene Arten realisiert werden. Es kommen integrierte oder diskrete Analog- oder Digitalschaltungen infrage. Die Regelungen können auch vollständig als auf einem Mikroprozessor ablaufender digitaler Regelalgorithmus implementiert sein. Für eine kostengünstige Lösung besonders bevorzugt ist eine Realisierung als analoge Schaltung mit mindestens einer Fehlereinheit zur Bildung je eines Fehlergrößensignals und mindestens einem Multivibrator zur Erzeugung eines Schaltsignals zur Steuerung des Wechselrichters.

Ein erfindungsgemäßer resonanter Konverter kann zwei voneinander getrennt regelbare Ausgangsspannungen liefern. Werden für eine Anwendung mehr als zwei Ausgangsspannungen benötigt, so werden diese in zwei Gruppen eingeteilt, wobei die Spannungen jeder Gruppe getrennt von den Spannungen der jeweils anderen Gruppe regelbar sind Die Bildung dieser Gruppen erfolgt hierbei derart, dass Sekundäreinheiten ersten Typs die Ausgangsspannungen der ersten Gruppe liefern, während Sekundäreinheiten des zweiten Typs die Ausgangsspannungen der zweiten Gruppe liefern. Alternativ kann die zweite Gruppe von Ausgangsspannungen auch solche Spannungen umfassen, die durch Sekundäreinheiten sowohl des ersten als auch des zweiten Typs gespeist werden (Stapel-Ausgang).

Nachfolgend werden Ausführungsformen der Erfindung anhand von Zeichnungen naher beschrieben. In den Zeichnungen zeigen:

Fig. 1 ein Schaltbild einer ersten Ausführungsform eines resonanten Konverters;

Fig. 2 ein Schaltbild einer zweiten Ausführungsform eines resonanten Konverters;

Fig. 3 ein Schaltbild einer dritten Ausführungsform eines resonanten Konverters;

Fig 4a ein Diagramm mit Darstellung des Zeitverlaufs von Strömen und Spannungen der Schaltung nach Fig 1 unter idealisierten Annahmen;

Fig. 4b ein Diagramm entsprechend Fig 4a mit niedrigerem Tastgrad und erhöher Frequenz;

Fig. 4c ein Diagramm entsprechend Fig 4a, 4b mit höherem Tastgrad und weiter erhöhter Frequenz;

Fig. 5 ein allgemeines Blockdiagramm einer Regelvorrichtung;

Fig. 5a ein Blockdiagramm eines Frequenzreglers;

Fig. 5b ein Blockdiagramm eines Tastgrad-Reglers;

Fig. 6 eine erste Ausführungsform einer Regeleinrichtung;

Fig. 7 eine zweite Ausführungsform einer Regeleinrichtung;

Fig. 8 eine dritte Ausführungsform einer Regeleinrichtung;

Fig. 9 ein Schaltbild einer möglichen Realisierung der Regeleinrichtung nach Fig 8.

Fig. 10 ein Diagramm mit Darstellung des Zeitverlaufs von Spannungen in Fig 9.

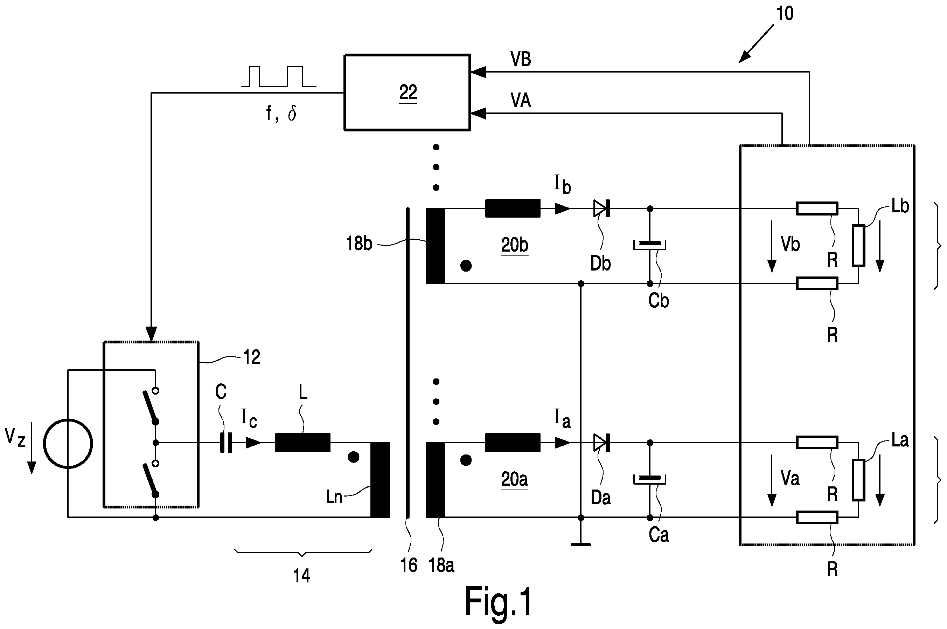

In Figur 1 ist ein Schaltbild einer ersten Ausführungsform eines resonanten Konverters 10 dargestellt. Der resonante Konverter 10 weist einen Wechselrichter 12 auf, ausgeführt als asymmetrisch schaltende Halbbrücke, der eine Resonanzanordnung 14 speist, die aus einer Serienkapazität C und der Primärseite eines Transformators 16 aufgebaut ist. In Fig 1 ist hier eine primärseitige Serien-Induktivität L dargestellt. Diese fasst die primärseitige Streuinduktivität des Transformators und eine mögliche externe Serieninduktivität zusammen. Die Hauptinduktivität des Transformators ist als Lh bezeichnet. Die Induktivitäten L und Lh bilden mit der Kapazität C einen Reihenresonanzkreis. Hier wird vereinfachend die Schaltung mit Resonanzkapazität C und der Primärseite des Transformators 16 als Resonanzanordnung 14 bezeichnet. In der Praxis darf selbstverständlich nicht übersehen werden, dass über den Transformator 16 zusätzlich reaktive Elemente der sekundärseitigen Schaltung auf der Primärseite wirksam werden und auch insbesondere das Resonanzverhalten der Resonanzanordnung 14 maßgeblich beeinflussen können.

Der resonante Konverter 10 weise zwei Sekundäreinheiten 20a, 20b auf. Jede der Sekundäneinheiten weist eine Sekundärwicklung 18a, 18b und eine Diode Da, Db auf. Die am Ausgang der Sekundäreinheiten 20a, 20b anliegenden Sekundärspannungen Va, Vb werden durch Filterkapazitäten Ca, Cb geglättet und bilden Ausgangsspannungen (direkte Ausgänge) des resonanten Konverters 10. An den Ausgängen des Konverters 10 ist über Abschlüsse (z. B. Stecker, Leitungen etc.), gekennzeichnet durch die Übergangswiderstände R, jeweils eine Last La, Lb angeschlossen.

Im Beispiel von Figur 1 unterscheiden sich die Sekundäreinheiten 20a, 20b dadurch, dass die Sekundärwicklungen 18a, 18b auf dem gemeinsamen Kern des Transformators 16 unterschiedliche Wicklungsorientierungen aufweisen. Dies ist in üblicher Weise mit einem Punkt gekennzeichnet. Im übrigen sind die Sekundäreinheiten 20a, 20b identisch, d h die jeweilige Sekundärwicklung 20a, 20b ist mit der jeweiligen Gleichrichtdiode Da, Db in gleicher Orientierung beschaltet.

Die untere Sekundäreinheit 20a wird im folgenden als Sekundäreinheit ersten Typs bezeichnet. Die in Figur 1 oben dargestellte Sekundäreinheit 20b wird als Sekundäreinheit zweiten Typs bezeichnet. Wie erwähnt besteht der Unterschied zwischen Sekundäreinheiten ersten und zweiten Typs bei gleicher Beschaltung in der entgegengesetzten Wicklungsorientierung. Derselbe Effekt kann auch erzielt werden, indem bei gleicher Wicklungsorientierung die Beschaltung vertauscht, d h die Diode Da bzw. Db am anderen Wicklungsende angeschlossen oder ihre Polung vertauscht wird (nicht dargestellt). Der hierdurch erzielte Effekt ist, dass bei der Sekundäreinheit ersten Typs 20a ein Strom durch die Diode Da im Wesentlichen während des positiven Spannungshubs fließt, während dies bei der Sekundäreinheit zweiten Typs 20b während des negativen Spannungshubs der Fall ist. Dies wird dadurch erzielt, dass innerhalb jeder Sekundäreinheit 20a, 20b die Spannung an der jeweiligen Sekundärwicklung 18a, 18b einweggleichgerichtet wird, wobei bei der Sekundäreinheit ersten Typs 20a nur bei positivem Spannungshub ein Strom über die Diode Da fließen kann, während beim negativen Spannungshub die Diode Da sperrt. Entsprechend umgekehrt verhält es sich bei der Sekundäreinheit zweiten Typs.

Im Betrieb liefert Wechselrichter 12 eine Wechselspannung, die durch wechselndes Schalten seiner beiden gesteuerten Schalter, beispielsweise realisiert durch FETs, erzeugt wird. Der Wechselrichter 12 wird hierbei in einer Weise angesteuert, dass er eine pulsweitenmodulierte geschaltete Wechselspannung der Resonanzanordnung 14 zuführt.

Der Wechselrichter 12 wird angesteuert durch eine Regeleinrichtung 22 zur Regelung der Ausgangsspannungen Va, Vb. Die Ausgangsspannungen Va, Vb werden gemessen. Hierbei kann, wie in Figur 1 dargestellt, die Ausgangspannung jeweils an den Ausgangsanschlüssen gemessen werden. Alternativ kann die Erfassung der Spannung an der Last erfolgen. Insbesondere bei hohen Strömen ist dies wesentlich genauer.

Die Ergebnisse der Messungen der Spannungen Va, Vb werden als Messsignale VA, VB der Regeleinrichtung 22 zugeführt. Die Regeleinrichtung 22 vergleicht die gemeesenen Spannungssignale VA, VB mit Soll-Werten (nicht dargestellt) und steuert den Wechselrichter 12 so an, dass die Ausgangsspannungen Va, Vb auf die gewünschten Soll-Werte geregelt werden.

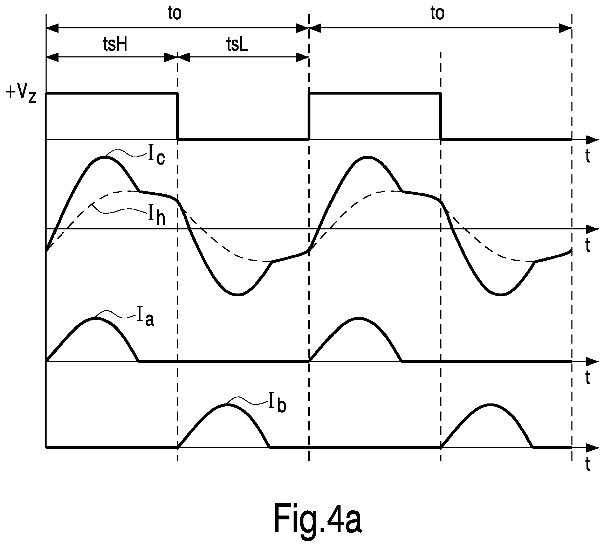

Hierbei wird der Wechselrichter 12 durch die Regeleinrichtung 22 so angesteuert, dass er eine pulsweitenmodulierte Spannung erzeugt. Der seitliche Verlauf einer solchen pulsweitenmodulierten Spannung ist in Figur 4a oben dargestellt. Innerhalb eines Zeitintervalls der Länge t0 ist zunächst der obere Schalter der Halbbrücke geschlossen, so dass ein positiver Spannungspuls der Amplitude +VZ entsteht. Dieser Puls weist eine Dauer tsH auf. Anschließend wird der obere Schalter geöffnet und der untere Schalter geschlossen, so dass für eine Dauer tsL die Spannung Null anliegt. Bei konstanter Amplitude VZ, vorgegeben durch die entsprechende Gleichspannung, ist der Zeitverlauf der pulsweitenmodulierten Spannung durch die Parameter Schaltfrequenz f mit $f = 1/t0$ und T astgrad $\delta$ mit $\delta = tsH/t0$ festgelegt. Alternativ wird der Zeitverlauf auch durch Vorgabe der Zeiten tsH, tsL vollständig festgelegt. Im Beispiel von Fig 4a beträgt der Tastgrad 50 %.

Der in Fig 4a gezeigte Verlauf ist selbstverständlich idealisiert. Tatsächlich gibt es beim Umschalten zur Vermeidung von Kurzschlüssen Totzeiten, in denen keiner der Schalter geschlossen ist. Zudem können die Pulsflanken in der Praxis nicht momentan ansteigen, sondern es ergeben sich Verläufe mit endlichen Anstiegszeiten, so dass die Spannungspulse etwa Trapezform annehmen.

Mit einem resonanten Konverter nach Figur 1 ist es möglich, die beiden Ausgangsspannungen Va, Vb getrennt voneinander zu regeln. Die beiden Spannungen Va, Vb werden hierbei direkt von zwei Sekundäreinheiten 20a, 20b entgegengesetzten Typs geliefert. Daher kann, wie nachfolgend erläutert wird, durch geeignete Vorgabe der Parameter der pulsweitenmodulierten Spannung (f, δ bzw. tsH, tsL) eine solche Ansteuerung vorgegeben werden, dass die Ausgangsspannungen Va, Vb unabhängig voneinander auf dem jeweiligen Soll-Wert geregelt werden können.

Wie bereits erwähnt handelt es sich bei Konverter 10 um eine resonante Topologie mit einem Serienkondensator C. Diese weist eine lastabhängige Resonanzfrequenz auf, wobei der Wert der Resonanzfrequenz im unbelasteten Fall aufgrund der verwendeten Komponenten zumindest näherungsweise bekannt ist. Der Betrieb der Schaltung erfolgt bei Schaltfrequenzen f, die deutlich oberhalb der jeweiligen Resonanzfrequenzen liegen.

In diesem Betriebsbereich tritt bereits eine gewisse resonante Spannungsüberhöhung auf. Durch Anregung der Resonanzanordnung 14 durch eine geringere Frequenz, die damit näher an die Resonanzfrequenz heranrückt, wird die Resonanzüberhöhung stärker, so dass die Ausgangsspannungen Va, Vb ansteigen. Aufgrund der zwei gegensätzlichen Typen von Sekundäreinheiten 20a, 20b ist es hierbei möglich, durch zusätzliche Vorgabe des Tastgrades δ eine der Ausgangsspannungen Va, Vb gegenüber der anderen zu erhöhen oder absinken zu lassen Dies wird nachfolgend anhand der Fig 4a - 4c erläutert:

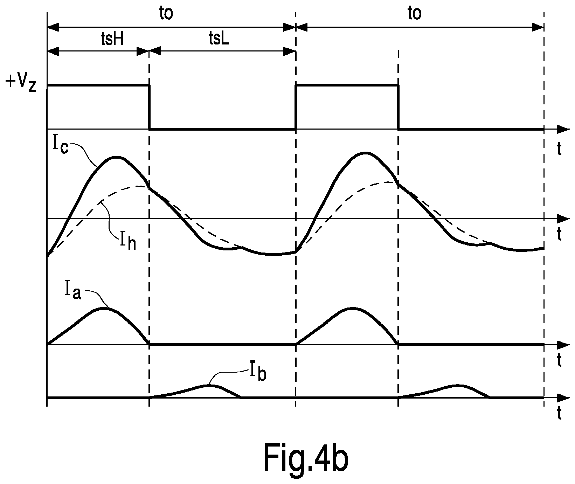

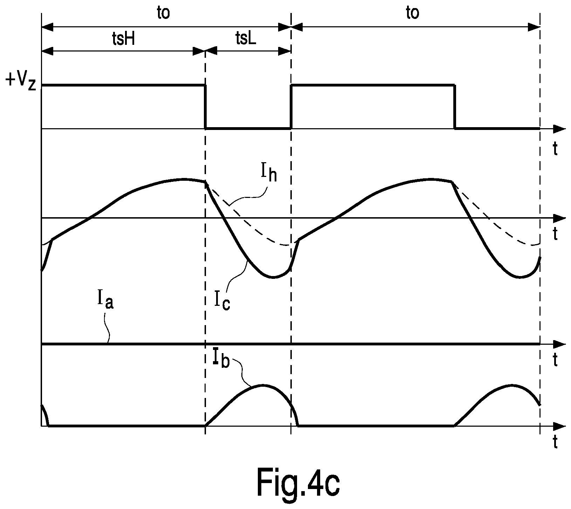

Die Fig 4a, 4b, 4c zeigen, wie durch Anpassung von Frequenz f bzw der Periodendauer t0 = 1/f und des Tastgrads δ eine Regelung der Ausgangaspannungen Va und Vb ermöglicht wird. Für zwei Zeitperioden t0 sind jeweils die Verläufe der Ausgangsspannung des Wechselrichters 12 (Anregungsspannung an der Resonanzanordnung 14), des Stroms Ic durch den Kondensator C, des Magnetisierungsstroms Ih durch die Hauptinduktivität des Transformators 16, des von der Sekundärwicklung 18a gelieferten Stomes Ia und des von der Sekundärwicklung 18b gelieferten Stromes Ib dargestellt. Der in den Figuren 4a, 4b, 4c angegebene Verlauf soll hier lediglich zur Erläuterung des Prinzips dienen, nach dem die beiden Ausgänge unabhängig voneinander geregelt werden. Die dargestellten Zeitverläufe zeigen die entsprechenden Größen unter der Annahme, dass alle Windungsverhältnisse gleich eins und die Größen der beiden Sekundäreinheiten 20a, 20b identisch sind, d h. Va = Vb. Weiter werden identische ausgangsseitige Serieninduktivitäten angenommen.

Fig 4a zeigt den Betriebszustand, bei der die Frequenz f0 = 1/t0 auf das 1,47 fache von fr eingestellt ist, wobei fr die Resonanzfrequenz des unbelasteten Konverters 10 ist und sich näherungweise zu

$$fr = \frac{1}{2\pi}\sqrt{\frac{1}{C[L+Lh]}}$$

bestimmt, wobei C die Kapazität des Kondensators C, L der Wert der primärseitigen Serien-Induktivität und Lh der Wert der Hauptinduktivität des Transformators 16 ist. Obige Gleichung gilt allerdings nur für den Fall des ausgangsseitig unbelasteten Konverters. Bei ausgangsseitiger Belastung ergibt sich eine von den ausgangsseitigen Streuinduktivitäten und im Allgemeinen auch an der Last abhängige Verschiebung. Die genaue Resonanzfrequenz für den belasteten Konverter 10 zu ermitteln ist relativ aufwendig. Daher wird lediglich die oben angegebene Resonanzfrequenz fr als Bezugsgröße für die Frequenz verwendet.

Das Tastverhältnis ist im Betriebsfall gemäß Fig 4a zu 50 % gewählt. In diesem Betriebszustand werden in den Zeiträumen tsH bzw. tsL Stromverläufe von Ia und Ib mit (nahezu) identischen Halbwellen während der Zeiträume tsH bzw. tsL erzeugt. Beim Betriebszustand gemäß Fig 4b ist die Frequenz f0 = 1 /t0 auf das 1,53 fache von fr erhöht. Das Tastverhältnis ist auf 40 % reduziert. Gegenüber dem Betriebszustand gemäß Fig 4a ist der Verlauf des Stroms Ia nahezu gleichgeblieben. Der Verlauf des Stromes Ib weist nun Halbwellen mit reduzierter Amplitude auf, so dass die über die Sekundärwicklung 18b zum Ausgang der zweiten Sekundäreinheit 20b transportierte Leistung reduziert ist. Fig 4c zeigt einen Betriebsfall mit einer Frequenz f0 = 1 /t0 gleich dem 1,55 fachen von fr und einem Tastverhältnis von 65 %. In diesem Betriebsfall ist der Storm Ia im wesentlichen auf Null reduziert und die Amplitude der Halbwellen von Ib sind gegenüber Fig 4b erhöht, so dass in diesem Betriebsfall von der Sekundärwicklung 18a keine Leistung zum Ausgang der ersten Sekundäreinheit 20a, jedoch von der Sekundärwicklung 18b eine gegenüber Fig 4b erhöhte Leistung von der Sekundärwicklung 18b zum Ausgang der zweiten Sekundäreinheit 20b transportiert wird.

Die beispielhaften Betriebszustände gemäß der Fig 4a - 4c machen deutlich, dass mit der Konverterschaltung nach Fig 1 eine sehr variable Anpassung an unterschiedliche Belastungen der verschiedenen Konverterausgänge möglich ist. Mit einem solchen Konverter lassen sich insbesondere auch bei kleinen Ausgangaspannungen und großen Ausgangsströmen, wie sie von modernen Mikroprozessoren benötigt werden, geringe Toleranzen der Ausgangsspannungen erreichen.

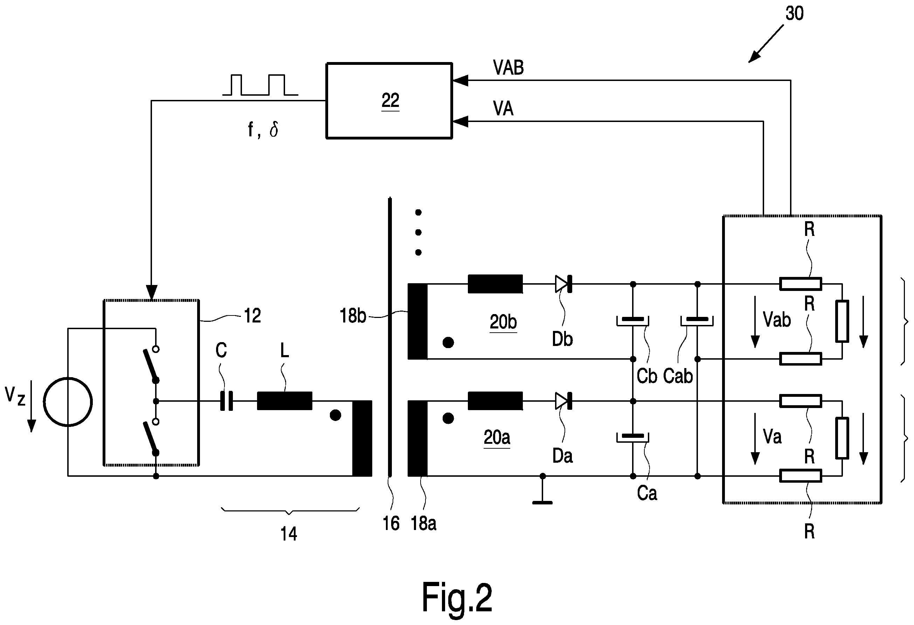

In Figur 2 ist eine zweite Ausführungsform eines resonanten Konverters 30 gezeigt. Der Konverter 30 ist weitgehend ähnlich dem Konverter 10 aus Figur 1 aufgebaut, wobei gleiche Elemente mit gleichen Bezugszeichen gekennzeichnet sind Im folgenden wird daher nur auf die Unterschiede eingegangen.

Im Gegensatz zum Konverter 10 aus Figur 1 sind die Ausgangsspannungen beim Konverter 30 aus Figur 2 an anderen Punkten der Schaltung abgegriffen.

Die erste Ausgangsspannung Va ist in beiden Fällen die Ausgangsspannung der ersten Sekundäreinheit 20a (direkter Ausgang). Beim Konverter 30 wird aber eine zweite Ausgangsspannung Vab verwendet, die über die Reihenschaltung der ersten Sekundäreinheit und der zweiten Sekundäreinheit 20b abfällt. Diese Form des Ausgangs wird als "Stapel"-Ausgang bezeichnet. Die Verwendung eines solchen Stapel-Ausgangs hat besonders dann Vorteile, wenn an diesem Ausgang besonders hohe Leistung benötigt wird Die Ausgangsspannung Vab ist über eine zusätzliche Filterkapazität Cab gefiltert.

Auch bei der zweiten Ausführungsform des Konverters 30 sind die beiden Ausgangsspannungen, in diesem Fall Va, Vab, durch die Regeleinrichtung 22 getrennt voneinander regelbar.

Die ersten und zweiten Ausführungsformen nach den Figuren 1 und 2 zeigen jeweils Konverter mit lediglich zwei Ausgangsspannungen, die unabhängig voneinander regelbar sind In der Praxis werden jedoch häufig Konverter benötigt, die eine Vielzahl von Ausgangsspannungen, beispielsweise zehn oder mehr verschiedene Ausgangsspannungen erzeugen können. Dies ist mit den Konvertern 10, bzw. 30 aus den Figuren 1 und 2 möglich, indem, wie dort durch Punkte angedeutet, weitere Sekundäreinheiten, jeweils bestehend aus Sekundärwicklung und Gleichrichtelement, hinzugefügt werden. Hierbei werden die Ausgangsspannungen in zwei Gruppen eingeteilt, wobei die Ausgangsspannungen der ersten Gruppe an Sekundärelementen ersten Typs und die Ausgangsspannungen der zweiten Gruppe an Sekundärelementen zweiten Typs erzeugt werden. Die beiden Gruppen von Ausgangsspannungen sind dann jeweils getrennt von der anderen Gruppe regelbar. Innerhalb der Gruppe hängen die Ausgangsspannungen allerdings über das Verhältnis der Windungszahlen der jeweiligen Sekundärwindungen fest miteinander zusammen. Daher wird bei der Regelung nur jeweils eine Spannung der ersten und eine der zweiten Gruppe berücksichtigt. Die übrigen Spannungen werden hierbei "mitgeregelt".

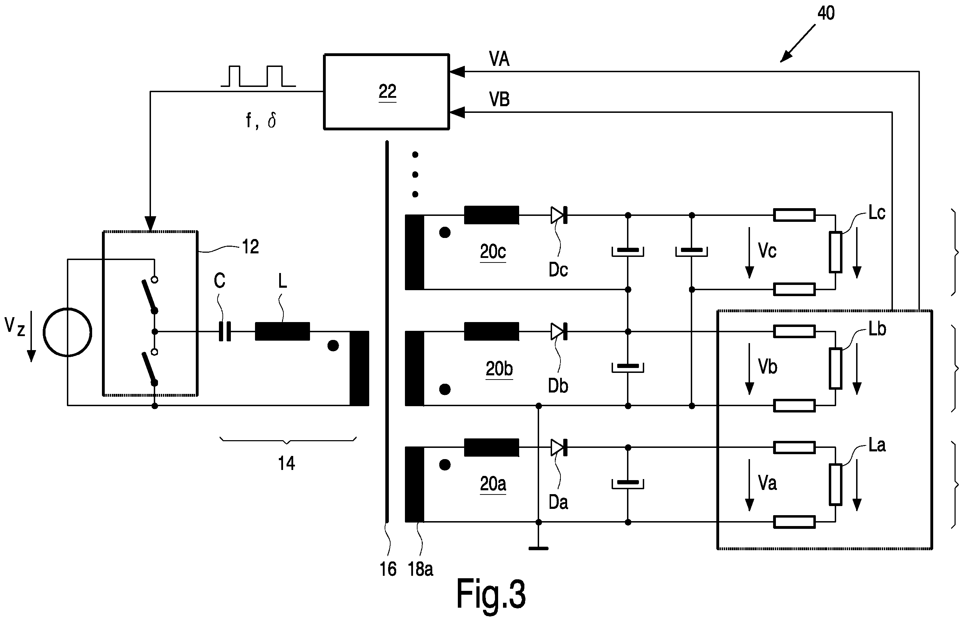

Hierbei können auch die verschiedenen Arten der Beschaltung der Sekundäreinheiten gemäß den Fig 1 und 2 kombiniert werden. Figur 3 zeigt beispielhaft eine entsprechende dritte Ausführngsform eines Konverters 40. Dieser -versorgt die drei Lasten La, Lb, Lc mit den jeweiligen Ausgangsspannungen Va, Vb, Vc. Die Ausgangsspannungen Va und Vb entsprechen jeweils den Sekundärspannungen der Sekundärelemente 20a, 20b. Zusätzlich liefert ein "Stapel-Ausgang" eine Ausgangsspannung Vc, die von der Reihenschaltung einer Sekundäreinheit 20c, die eine Sekundäreinheit ersten Typs ist, und Sekundäreinheit 20b, die eine Sekundäreinheit zweiten Typs ist, gespeist wird Im gezeigtes Beispiel werden lediglich die Ausgangsspannungen Va, Vb gemessen und durch die Regeleinrichtung 22 geregelt. Die Ausgangsspannung zur Versorgung der Last Lc wird hierbei quasi "mitgenegelt". Alternativ können auch andere Ausgangsspannungen (direkt) geregelt werden, beispielsweise Vc und Vb oder Va und Vc.

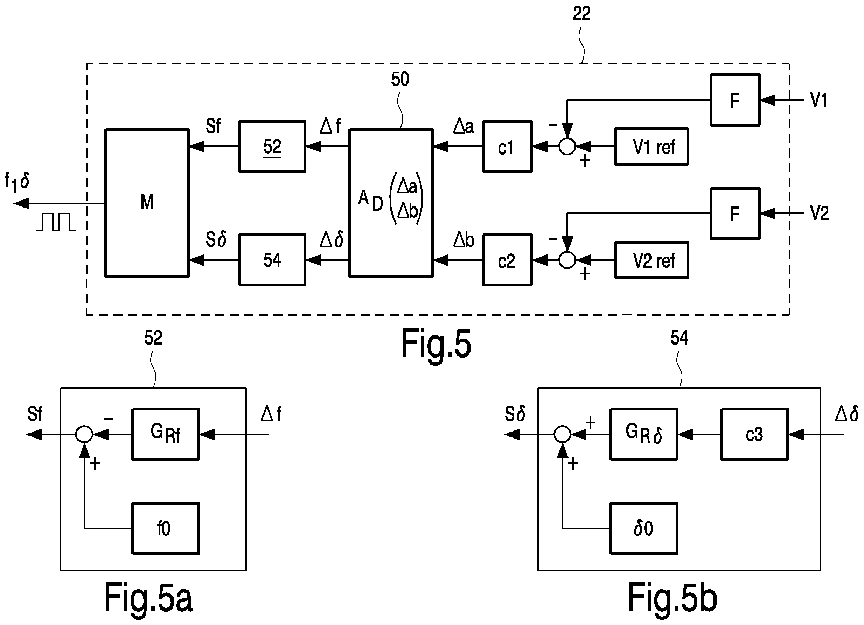

Nachfolgend wird auf die Regeleinrichtung 22 eingegangen. Ein Blockdiagramm, das einem grundsätzlichen Aufbau dieser Regeleinrichtung dargestellt, ist in Figur 5 gezeigt.

An den beiden Eingängen V1, V2 nimmt die Regeleinrichtung 22 zwei Spannungsmesssignale auf. Beilspielsweise bei der ersten Ausführungsform eines Konverters 10 sind dies die Messsignale VA, VB; bei der zweiten Ausführungsform eines Konverters 30 die Messsignale VA und VAB. In allgemein als Filter F dargestellten Filtern (die ggfs. auch weggelassen werden können) werden diese Signale zunächst gefiltert. Anschließend werden sie zur Bildung einer Regeldifferenz mit den jeweiligen Referenzspannungen V1ref, V2ref vergrichen. Diese können durch Referenzspannungsquellen bzw. vorgegebene Werte innerhalb der Regeleinrichtung 22 fest vorgegeben sein. Alternativ ist es auch möglich, diese Vorgaben als Eingangssignale aufzunehmen. Darauf folgt eine Normierung mit den

Faktoren c1 und c2, wobei diese bevorzugt so eingestellt werden, dass c1 /c2 = V2ref / V1ref. Durch diese Normierung wird ermöglicht, dass zwei Soll-Werte V1ref, V2ref vorgegeben werden können, die stark voneinander abweichen. Ohne eine solchen Normierung würde eine prozentual geringe Regelabweichung von betragsmäßig größerem Soll-Wert einen sehr starken Einfluss auf die Regelung haben, während eine prozentual gravierende Abweichung vom betragsmäßig kleineren Soll-Wert nur einen geringen Einfluss hätte. Die so normierten Abweichungen werden mit $\Delta a$, $\Delta b$ bezeichnet.

Diese normierten Regelabweichungen $\Delta a$, $\Delta b$ werden in einer Entkoppplereinheit 50 entkoppelt. Unter "Entkopplung" wird hierbei die Aufteilung der in den Abweichungen $\Delta a$, $\Delta b$ gemeinsam enthaltenen Informationen in Informationen bezüglich der Frequenz einerseits und des Tastgrads andererseits verstanden Mathematisch kann dies durch Multiplikation des Vektors der Regelabweichung ($\Delta a$, $\Delta b$) mit einer Entkopplungsmatrix $A_D$ repräsentiert werden. Ergebnisse der Entkopplungsoperation sind die Größen $\Delta f$ und $\Delta \delta$, die jeweils als Vorgabe für Anpassungen der Frequenz ($\Delta f$) bzw. desTastgras($\Delta \delta$) verwendet werden.

Die beiden Ausgangswerte $\Delta f$, $\Delta \delta$ des Entkopplers werden jeweils eindimensionalen Reglern 52, 54 zugeführt. Hierbei regelt der Regler 52 die Schaltfrequenz f der pulsweitenmodulierten Spannung während der Regler 54 den Tastgrad $\delta$ der pulsweitenmodulierten Spannung regelt.

Die Struktur der Regler 52, 54 ist in den Fig 5a und 5b jeweils in Form von Blockdiagrammen angegeben. Sowohl der Regler 52, der den Vorgabewert $S\delta$ für die Frequenz liefert als auch der Regler 54 für den Tastgrad $S\delta$ verwenden Startwerte für Frequenz f0 und Tastgrad $\delta$ 0, zu denen Regelkorrekturen hinzuaddiert werden. Im Fall des Reglers 54, der eine Vorgabe $S\delta$ für den Tastgrad liefert, wird die Regelkorrektur durch einen I-, PI- oder PID-Regler aus dem Signal Δδ ermittelt und zur Vorgabe δ 0 von beispielsweise 50 % addiert. Der Regler 52 für die Frequenz hat dieselbe Struktur. Auch hier wird aus der Größe Δf mit einem I-, PI- oder PID-Regler eine Korrektur ermittelt, die zum Ausgangswert f0 hinzuaddiert wird. Der Integralanteil des verwendeten Reglers kann auch eine bleibende Regelabweichung kompensieren, so dass die Genauigkeit des Vorgabewertes f0 bzw. δ 0 nicht entscheidend ist.

Beim Tastgrad-Regler 54 erfolgt allerdings zunächst eine Multiplikation mit einem konstanten Faktor c3. Dieser Faktor dient hierbei dazu, die Regelstrategie in Abhängigkeit von der jeweils vorliegenden zu regelnden Konverterschaltung festzulegen. Die Konstante c3 nimmt einen Wert 1 an, wenn in Fig. 5 das Messsignal V1 die Ausgangsspannung einer Sekundäreinheit ersten Typs und das Messsignal V2 die Ausgangsspannung einer Sekundäreinheit zweiten Typs ist. Liegen die Verhältnisse umgekehrt, d h ist V1 das Messsignal der Ausgangsspannung einer Sekundäreinheit zweiten Typs und V2 das Messsignal einer Ausgangsspannung ersten Typs, so hat die Konstante c3 den Wert -1.

Die Regelvorgaben der Regler 52, 54 steuern einen Modulator M zur Erzeugung eines Ansteuersignals für den Wechselrichter 12 an. In den gezeigten Beispielen nach Figuren 1-3 weist der Wechselrichter 12 eine asymmetrisch schaltende Halbbrücke mit einem Halbbrückentreiber auf. Dem Halbbrückentreiber wird ein Pulssignal zugeführt, wobei bei einem Hi-Pegel des Pulssignals der obere Schalter geschlossen und der untere Schalter geöffnet ist, und bei einem Lo-Pegel der untere Schalter der Halbbrücke geschlossen und der obere geöffnet ist. Der Modulator M erzeugt ein solches Pulssignal entsprechend der Vorgabe des Reglers 52 für die Schaltfrequenz und des Reglers 54 für den Tastgrad

Das in Figur 5 gezeigte Blockdiagramm gilt allgemein für die Regelung zweier Spannungen durch Vorgabe von Frequenz und Tastgrad der pulsweitenmodulierten Spannung Je nach Typ der geregelten Spannungen V1, V2 werden hier unterschiedliche Entkoppler 50 verwendet, wie die nachfolgenden Beispiele zeigen:

Beispiel 1: zwei unabhängige "direkte" Ausgangaspannungen

Für die erste Ausführungsform eines Konverters 10 gemäß Figur 1, bei dem direkt die Sekundärspannungen zweier Sekundäreinheiten 20a, 20b entgegengesetzten Typs die Ausgangsspannungen Va, Vb bilden, ist die Vorgabe Δf an den Frequenzregler 52 die Summe der normierten Regelabweichungen Δa, Δb und die Vorgabe Δδ an dem Tastgrad-Regler 54 die Differenz dieser normierten Regelabweichungen. Drückt man die in diesem Fall durch den Entkoppler 50 ausgeführte Operation als Matrix-Multiplikation aus $\mathbf{A_D} \cdot \begin{pmatrix} \Delta a \\ \Delta b \end{pmatrix}$, so wird als

Entkopplungsmatrix $\mathbf{A_D} = \begin{pmatrix} 1 & 1 \\ -1 & 1 \end{pmatrix}$ verwendet. Zu

beachten ist die oben beschriebene Wahl der Konstante c3 des Reglers 54.

Beispiel 2: Eine "direkte" Ausgangsspannung, ein "Stapel"-Ausgang

Für die zweite Ausführungsform eines Konverters 30 gemäß Figur 2, bei dem eine Ausgangsspannung Va von einer Sekundäreinheit 20a ersten Typs geliefert wird, die zweite Ausgangsspannung Vab jedoch von einer Sekundäreinheit zweiten Typs 20b gemeinsam mit einer Sekundäreinheit ersten Typs 20a ("Stapel-Ausgang"), wird bevorzugt eine abweichende Funktion des Entkopplers 50 verwendet. Hier soll als Vorgabe Δf für den Frequenz-Regler 52 die normierte Regelabweichung Δa (Regelabweichung des Stapd-Ausgangs) und als Vorgabe Δδ für den Tastgrad-Regler 54 die normierte Regelabweichung Δb (Regelabweichung am direkten Ausgang) vorgegeben werden. In Matrixschreibweise ergibt sich eine Entkopplungsmatrix, die gleich der Einheitsmatrix ist:

$$\mathbf{A_D} = \begin{pmatrix} 1 & 0 \\ 0 & 1 \end{pmatrix}.$$

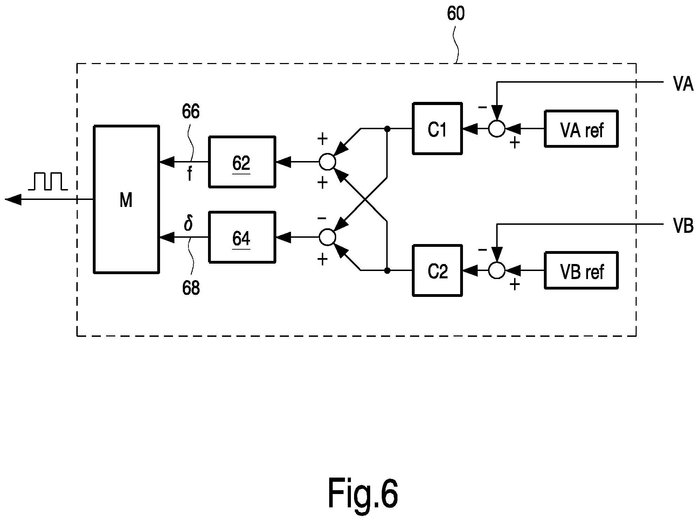

In Figur 6 ist eine erste Ausführungsform für eine Realisierung der allgemeinen Regeleinrichtung 22 aus Figur 5 gezeigt.

Entsprechend dem oben erläuterten ersten Beispiel arbeitet die Regeleinrichtung 60 mit Messsignalen VA, VB für die Ausgangsspannungen Va, Vb der ersten Ausführungsform eines Konverters 10 aus Figur 1. Für beide Ausgangsspannungen sind intern feste Soll-Werte VAref, VBref vorgegeben. Die gemessenen Spannungen VA, VB werden von den Soll-Werten subtrahiert um so die Regeldifferenz zu erhalten Anschließend erfolgt eine Normierung mit den Faktoren c1, c2, wobei gilt

$$\frac{c1}{c2} = \frac{VAref}{VBref}.$$

Von den so normierten Regelabweichungen wird die Summe gebildet und einem PID-Regler 62 (Frequenzregler) zugeführt. Die Struktur des Reglers 62 ist oben im Zusammenhang mit Fig 5a erläutert. Da VA ein Messsignal einer Ausgangsspannung einer Sekundäreinheit ersten Typs und VB ein Messsignal einer Ausgangsspannung zweiten Typs ist, hat die interne Konstante c3 den Wert 1.

Gleichzeitig wird eine Differenz gebildet und einem PID-Regler 64 (Tastgradregler) zugeführt. Der Tastgradregler 64 entspricht Fig 5b. Der Frequenzregler 62 liefert an den Modulator M einen Wert 66, der die Frequenz f des vom Modulator M erzeugten Pulssignal vorgibt. Der Tastgradregler 64 führt dem Modulator M ein Signal 68 zu, das den Tastgrad δ des vom Modulator M erzeugten Pulssignals vorgibt. Durch den Modulator M wird über einen Treiber der Wechselrichter 12 angesteuert, so dass dieser eine pulsweitenmodulierte Spannung mit den entsprechenden Vorgaben für Frequenz und Tastgrad liefert, mit dem die Resonanzanordnung 14 angeregt wird.

Falls beispielsweise die an einem Ausgang des Konverters 10 gemessene Ausgangsspannung VAkleiner ist als der vorgegebene Soll-Wert VAref, so führt dies zu einer (positiven) Regeldifferenz. Da die Summe der Regeldifferenz ebenfalls positiv ist, folgt einerseits eine Verringerung der vom Regler 62 eingestellten Frequenz Da andererseits die Differenz der Regelabweichungen negativ ist, wird hierdurch auch eine Verkleinerung vom Regler 64 vorgegebenen Tastgrads des vom Modulator M erzeugten Pulssignals (und damit der Ausgangsspannung des Wechselrichters 12) bewirkt. Wie in Fig 4b dargestellt, bewirkt dies, dass die Ausgangsspannung Va gegenüber der Ausgangsspannung Vb, erhöht wird.

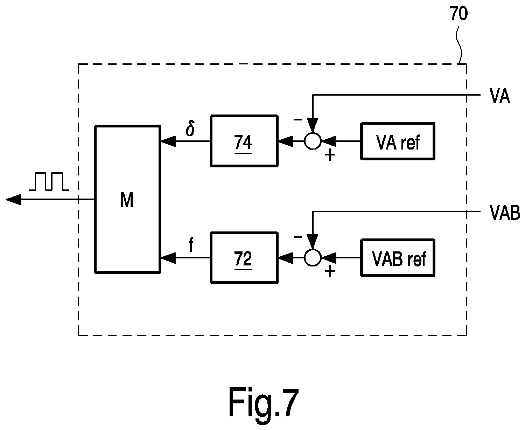

In Fig 7 ist eine zweite Ausführungsform für eine Realisierung der allgemeinen Regeleinrichtung 22 aus Fig 5 gezeigt. Die dargestellte Regeleinrichtung 70 dient zur Regelung der zweiten Ausführungsform eines Konverters 30 gem. Fig 2, bei dem eine Ausgangsspannung Va ein "direkter" Ausgang ist (Ausgangsspannung Va ist die Ausgangsspannung der Sekundäreinheit ersten Typs 20a), die zweite Ausgangsspannung Vab aber eine Ausgangsspannung an einem "Stapel"-Ausgang ist, dessen Spannung über die Reihenschaltung der Sekundäreinheit 20a ersten Typs und der Sekundäreinheit 20b zweiten Typs abfällt. Die Ausgangsspannungen Va, Vab werden gemessen und als Messsignale VA, VAB der Regeleinrichtung 70 zugeführt. Die Spannungen werden jeweils mit Soll-Werten VAref, VABref verglichen. Da in diesem Spezialfall auf die Entkopplung verzichtet wird (s. o., zweites Beispiel zu Fig. 5, die Entkopplungsmatrix ist die Einheitsmatrix), ist eine Normierung nicht notwendig. Die Regelabweichung der Spannung Vab des Stapelausgangs wird direkt einem PID- Regler 72 zur Regelung der Frequenz f zugeführt. Die Regelabweichung der Ausgangsspannung Va wird direkt einem PID-Regler 74 für eine Vorgabe des Tastgrads δ zugeführt. Die Struktur der Regler entspricht hier dem oben erläuterten Reglern 52, 54.

Sinkt beispielsweise die Spannung Vab am Stapelausgang unter dem Soll-Wert VABref ab, so führt dies zu einer positiven Regeldifferenz, die dem PID-Regler 72 zugeführt wird. Dies führt zu einer Verringerung der Frequenz f, so dass durch Verwendung einer Anregungsfrequenz, die nun näher an die Resonanzfrequenz der Resonanzanordnung 14 heranrückt, die beiden Ausgangsspannungen - und damit die Ausgangsspannung Vab am Stapel-Ausgang - ansteigt. Die hierdurch hervorgerufene Regelabweichung der Ausgangs-spannung Va vom vorgegebenen Soll-Wert VAref wird anschließend durch den Tastgrad-Regler 74, dem die Regelabweichung zugeführt wird, durch Erhöhung des Tastgrads δ ausgeregelt.

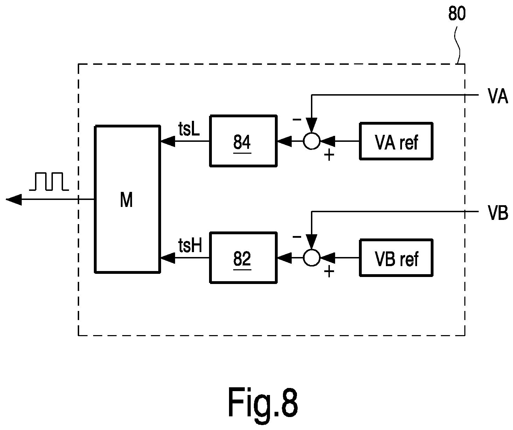

In Fig 8 ist eine dritte Ausführungsform einer Regeleinrichtung 80 gezeigt. Anders als die Regeleinrichtungen 60, 70 der Fig 6 und 7 verwendet die Regeleinrichtung 80 als Parameter für die Vorgabe der Ansteuerung des Wechselrichters 12 nicht Frequenz und Tastgrad einer pulsweitenmodulierten Spannung, sondern die jeweiligen Schaltzeiten tsH, tsL für den oberen bzw. unteren Schalter der Halbbrücke des Wechselrichters 12. Die Struktur der Regeleinrichtung 80 ist besonders einfach Dennoch kann damit der Konverter 10 aus Fig 1 effektiv geregelt werden.

Aus den Messsignalen VA, VB für die beiden Ausgangsspannungen Va, Vb werden zunächst die Regelabweichungen von den vorgegebenen Soll-Werten VAref, VBref ermittelt. Die so gebildete Regelabweichung der Messspannung VA wird einem Regler 84 zur Vorgabe der Schaltzeit für den unteren Schalter tsL zugeführt. In gleicher Weise wird die Regelabweichung der Messspannung VB einem Regler 82 zur Vorgabe der Einschaltzeit des oberen Schalters tsH zugeführt. Aus den Vorgaben tsH, tsL generiert ein Modulator M ein Pulssignal zur Ansteuerung des Wechselrichter 12.

Die Regler 82, 84 für die Einschaltzeiten tsL, tsH können optional Vorgaben für Mindest- und/oder Höchstwerte für die Werte tsL, tsH vorgeben. Hierdurch werden Mindest- bzw. Höchstwert für die Schaltfrequenz vorgegeben, so dass ein Betrieb stets in einem definierten Frequenzbereich stattfindet.

Nachfolgend wird ein Beispiel für die Funktionsweise der Regeleinrichtung 80 gegeben:

Sinkt die Messspannung VA der Ausgangsspannung Va des Konverters 10 aus Fig 1 unter den vorgegebenen Soll-Wert VAref ab, so ergibt sich eine (positive) Regeldifferenz, die dem Regler 84 zugeführt wird Regler 84 erhöht daraufhin die Einschaltdauer tsH für den "negativen" Spannungspuls der pulsweitenmodulierten Spannung, d h bei Verwendung einer Halbbrücke der Zeitraum in dem die Spannung Null ist. Wie aus den Fig 4a - 4c und der entsprechenden Erläuterung zu entnehmen, führt dies zu einer Erhöhung der Leistung am Ausgang Va, so dass die Regelabweichung ausgeregelt werden kann

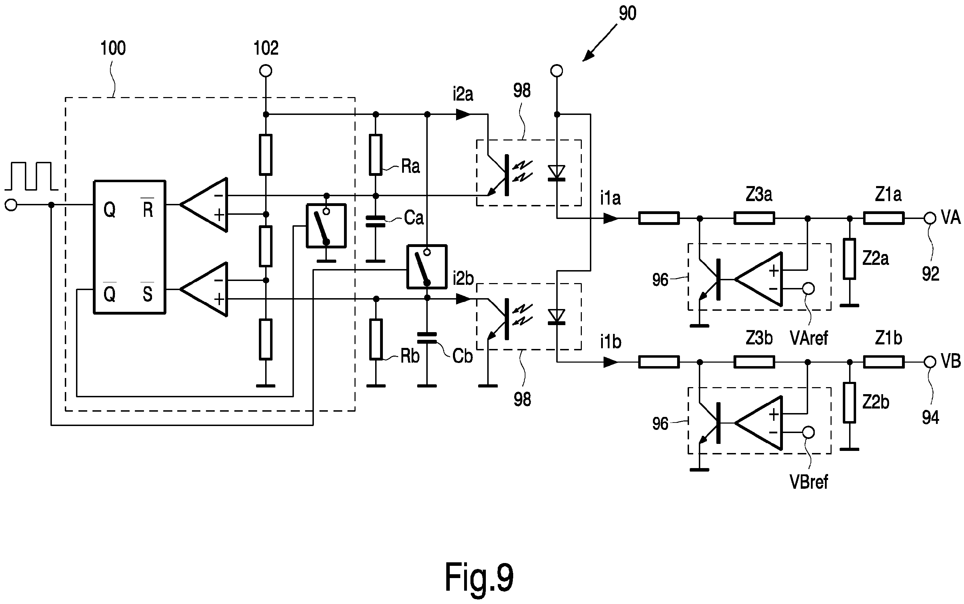

Wie bereits erwährt, können die vorstehend beschriebenen Ausführungsbeispiele für Regelemrichtungen auf sehr unterschiedliche Weise realisiert werden. Insbesondere können die Regelalgorithmen als auf einem Signal- oder Microprozessor ablaufendes Programm realisiert sein. Nachfolgend wird anhand von Fig 9 ein Realisierungsbeispiel der Regeleinrichtung 80 aus Fig 8 beschrieben, bei dem die Regeleinrichtung als sehr einfache Analog:cl1alhmg ausgeführt ist. Da einzelne Komponenten dieser Analogschaltung zudem als kostengünstige Standardbauteile vorliegen, ist so insgesamt eine extrem kostengünstige Realisierung möglich.

In Fig 9 ist eine Schaltung 90 dargestellt, die ausgehend von den Messsignalen VA, VB der Ausgangsspannungen des Konverters 10 aus Fig 1 ein Pulssignal zur Ansteuerung des Wechselrichters 12 erzeugt.

Die Messsignale VA, VB, die als Messspannungen analog vorliegen, werden zunächst über einen Spannungsteiler aus Impedanzen Z1a, Z2a am Eingang 92 bzw. Z1b, Z2b am Eingang 94 normiert. Eine solche Normierung ist notwendig, wenn interne Referenzspannungen verwendet werden, die nur in bestimmten Werten verfügbar sind Zusätzlich können die Messsignale VA, VB durch geeignete Wahl der Impedanzen auch gefiltert werden.

Die heruntergeteilte Spannung wird an jedem der Eingänge 92, 94 zunächst einem Fehlerverstärker 96 zugeführt. Diese sind, wie durch gestrichelte Kästchen angedeutet, als integrierte Bausteine verfügbar. Es handelt sich jeweils um eine integrierte Standard-Schaltung mit der Bezeichnung "431 ". Am invertierenden Eingang des darin enthaltenen Operationsverstärkers liegt die interne Referenzspannung VAref bzw. VBref an, mit der die durch die Impedanzen Z1a, Z2a bzw. Z2a, Z2b normierte Messspannung VAbzw. VB verglichen wird Die Fehlerverstärker 96 sind über Impedanzen Z3a, Z3b rückgekoppelt, so dass ein über den Wert der Impedanzen Z3a, Z3b einstellbare (PID) Regelverhalten entsteht. So wird der Wert des Stroms i1a bzw. i1b in Fig 9 geregelt.

An die Fehlerverstärker 96 ist jeweils ein Optokoppler 98 abgeschlossen, bei dem der Strom i1a bzw. i1b durch die LED fließt. Über die Optokoppler 98 ist eine - für Netzteilanwendungen oft vorgeschriebene - galvanische Trennung des rechten Bereichs der Schaltung 90 mit den Eingängen 92, 94 vom linken Teil der Schaltung 90 gegeben. Über jeden der Optokoppler 98 wird ein analoges Signal in Form der Ströme i1a, i1b überragen. Alternativ kann die galvanische Trennung auch dadurch erreicht werden, dass die gesamte Schaltung 90 sich auf der Sekundärseite befindet und nur das (digitale) Pulssignal über einen(digitalen) Optokoppler zum Wechselrichter 12 übertragen wird

Auf der in Fig 9 linken Seite der Schaltung 90 ist ein integrierter Timer-Baustein 100 (verwendet werden kann beilspielsweise ein bekannter integrierter Baustein mit der Bezeichnung "555") als Multivibrator beschaltet, der an seinem Flip-Flop-Ausgang Q ein Pulssignal der Zustände Hi und Lo ausgibt. In der Beschaltung gemäß Fig. 9 geben die Ströme i1a, i1b bzw. auf der anderen Seite der Optokoppler 98 i2a, i2b jeweils die Zeitdauer des Lo-Pegels (vorgegeben über i2a) und des Hi-Pegels (vorgegeben über i2b) vor.

Bei der gezeigten Schaltung wird über die Ladezeit von Kapazitäten Ca, Cb die Zeit bis zum Umschalten vom Lo-Ausgangspegel des Ausgangs Q in den Hi-Pegel, bzw. umgekehrt vorgegeben. Die Spannungen an diesen Kapazitäten Ca, Cb werden jeweils an internen Vergleichern innerhalb des Timer-Bausteins 100 mit der heruntergeteilten Versorgungsspannung 102 verglichen. Beim Erreichen der Vergleichsspannungen wird ein Schaltimpuls erzeugt, so dass das Flip-Flop "kippt". Über einen Discharge-Ausgang (in Fig 9 als Schalter dargestellt) werden die Kapazitäten hierbei schlagartig entladen (Ca) bzw auf Versorgungsspannung 102 aufgeladen (Cb).

Die Kapazität Ca wird hierbei über den Strom i2a geladen. Parallel hierzu erfolgt die Ladung der Kapazität Ca auch über den mit der Versorgungsspannung 102 verbundenen Widerstand Ra. In gleicher Weise wird die Kapazität Cb über i2b auf Masse entladen, wobei parallel auch eine Entladung über den Widerstand Rb erfolgt. Über die Widerstände Ra, Rb kann so eine maximale Einschaltzeit für Hi- bzw. Lo-Pegel, und somit eine minimale Frequenz vorgegeben werden. Diese berechnet sich aus den Zeitkonstanten Ra *Ca bzw. Rb * Cb.

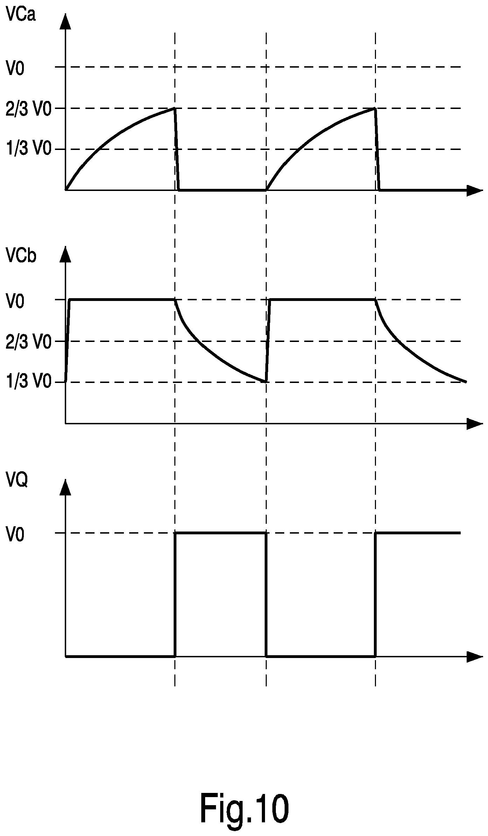

Der Zeitverlauf einiger Spannungen aus der Schaltung nach Fig. 9 ist in Fig. 10 dargestellt. Hierbei ist der jeweils periodische Zeitverlauf der Spannung VCa an der Kapazität Ca und der Spannung VCb an der Kapazität Cb aus Fig 9 gezeigt. Unten in Fig 10 ist schließlich das Pulssignal am Ausgang Q des Multivibrator-Bausteins 100, VQ, gezeigt.

Die Spannungen sind jeweils normiert auf die Versorgungsspannung V0 angegeben.

Fig 10 zeigt hierbei, wie die Spannung an der Kapazität Ca periodisch durch den Strom i2a bis auf 2/3 V0 aufgeladen wird. Bei 2/3 V0 schaltet der obere Vergleicher des Multivibrator-Bausteins 100, so dass ein Impuls am Inversen R-Eingang des Flip-Flops ausgelöst wird. Die Pulssignal-Spannung VQ kippt daher vom Lo-in den Hi-Pegel. Über den Discharge-Ausgang (in Fig 9 als Schalter dargestellt) wird die Kapazität Ca schlagartig entladen.

Solange VQ auf Hi-Pegel ist, wird die Kapazität Cb, die ursprünglich auf den Wert der Versorgungsspannung V0 aufgeladen ist, mit dem Strom i2b entladen. Beim Erreichen von 1/3 V0 kippt durch den Schaltimpuls am Inversen S-Eingang das Flip-Flop, so dass VQ wieder in den Lo-Pegel wechselt.

Beim Ablauf nach Fig 10 bestimmen somit die Ströme i2a, i2b die jeweiligen Lade- bzw. Entladekurven der Kapazitäten Ca, Cb und damit die Dauer bis zum Erreichen der jeweiligen Schaltschwelle.

Die Funktionsweise der Regelung durch Schaltung 90 soll nachfolgend an einem Beispiel erläutert werden:

Zunächst wird davon ausgegangen, dass die an den Spannungsteilern Z1a, Z2a bzw. Z1b, Z2b heruntergeteilten Messspannungen VA, VB gleich den jeweils am invertierenden Eingang des in den Fehlerverstärken 96 enthaltenen Operationsverstärkers anliegenden internen Referenzspannungen VAref, VBref sind Steigt nun beilspielsweise die Ausgangsspannung Vb an, so dass die heruntergeteilte Messspannungen VB größer ist als VBref, so steigt der Strom i1b, und damit auch der Strom i2b an. Hierdurch wird die Kapazität Cb schneller entladen, so dass sich die Einschaltzeit des Hi-Pegels verkürzt. Dies hat, betrachtet man das Pulssignal am Ausgang Q als pulsweitenmodulierte Spannung hinsichtlich Frequenz und Tastgrad, eine Erhöhung der Frequenz und gleichzeitig eine Verringerung des Tastgrads zur Folge. Hierdurch sinken beide Ausgangsspannungen ab (Folge der erhöhten Frequenz), jedoch steigt Va im Vergleich zu Vb (Folge des verringerten Tastgrads). So wird die Regelabweichung ausgeregelt.

Die Erfindung lässt sich dahingehend zusammenpassen, dass ein resonanter Konverter und ein Regelverfahren für einen resonanten Konverter vorgestellt werden. Der resonante Konverter enthält eine Resonanzanordnung mit einem Transformator, die durch einen Wechselrichter mit einer geschalteten Wechselspannung bevorzugt einer pulsweitenmodulierten Spannung gespeist wird. Die Schaltung enthält mehrere Sektmdäreinheiten, jeweils bestehend aus einer Sekundärwicklung des Transformators und mindestens einem Gleichrichtelement (Diode). Die Sekundäreinheiten sind in Sekundäreinheiten ersten und zweiten Typs unterteilt, wobei Sekundäreinheiten ersten Typs und Sekundäreinheiten zweiten Typs gegensätzliche Orientierungen aufweisen. Bevorzugt weisen Sekundäreinheiten entgegengesetzten Typs entweder bei gleicher Beschaltung unterschiedliche Wicklungsorientierung auf, oder sind bei gleicher Wicklungsorientierung entgegengesetzt beschaltet. Der resonante Konverter liefert mindestens zwei Ausgangsspannungen, von denen eine erste Ausgangsspannung von der Spannung an der ersten Sekundäreinheit abhängt ("direkter Ausgang") und die zweite Ausgangsspannung entweder nur von der Spannung der zweiten Sekundäreinheit oder von der Spannung an der ersten und der zweiten Sekundäreinheit ("Stapel-Ausgang") abhängt. Zusätzlich weist der Konverter eine Regeleinrichtung zur getrennten Regelung der beiden Ausgangsspannungen auf, die die Ansteuerung des Wechselrichters vorgibt. In verschiedenen Ausführungsformen werden hierbei die Wechselrichter entweder Frequenz und Tastgrad oder die Pulsdauern der zu erzeugenden pulsweitenmodulierten Spannung so vorgegeben, dass mit diesen beiden Parametern als Stellsignal die beiden Ausgangsspannungen unabhängig voneinander geregelt werden können Hierbei werden für verschiedene Ausgangskonfigurationen verschiedene Regler vorgeschlagen.

**Patentansprüche**

1. Resonanter Konverter mit
   einem Wechselrichter (12) zur Erzeugung einer Wechselspannung mittels einer Halbbrücke oder einer Vollbrücke, mit der aus einer Eingangsgleichspannung durch wechselseitiges Schalten mindestens zweier Schalter Spannungspulse erzeugt werden,
   und einer durch die Wechselspannung gespeisten Resonanzanordnung (14) mit mindestens einer Serienkapazität (C) und mindestens der Primärseite eines Transformators (16),
   wobei mindestens zwei Sekundäreinheiten (20a, 20b) vorgesehen sind, gebildet jeweils mindestens aus einer Sekundärwicklung (18a, 18b) des Transformators (16) und mindestens einem Gleichrichtelement (Da, Db),
   von denen eine erste Sekundäreinheit (20a) und eine zweite Sekundäreinheit (20b) entgegengesetzt orientiert sind,
   und wobei mindestens zwei Ausgangsspannungen geliefert werden, von denen eine erste Ausgangsspannung (Va) von der ersten Sekundäreinheit (20a) und eine zweite Ausgangsspannung (Vb, Vab) entweder von der zweiten Sekundäreinheit (20b) oder von der ersten und der zweiten Sekundäreinheit (20a, 20b) geliefert wird,
   wobei zusätzlich eine Regeleinrichtung (22) zur getrennten Regelung der ersten und zweiten Ausgangsspannung (Va, Vb; Vab) jeweils auf einen Soll-Wert (VAref, VBref; VAref, VABref) durch Ansteuerung des Wechselrichters (12) in Abhängigkeit der ersten Ausgangsspannung (Va) und der zweiten Ausgangsspannung (Vb, Vab) vorgesehen ist,
   wobei der Wechselrichter (12) durch ein Pulssignal so angesteuert ist, dass eine pulsweitenmodulierte Spannung zur Speisung der Resonanzanordnung (14) geliefert wird, und
   wobei die Regeleinrichtung (22) so ausgebildet ist, dass sie zwei Stellgrößen (f, $\delta$; tsH, tsL) zur Erzeugung des Pulssignals liefert, die den Zeitverlauf der pulsweitenmodulierten Spannung vorgeben.

2. Resonanter Konverter nach Anspruch 1, bei dem zwei Typen von Sekundäreinheiten (20a, 20b) vorgesehen sind,
   wobei die Sekundäreinheiten eines ersten Typs (20a) zu den Sekundäreinheiten eines zweiten Typs (20b) entgegengesetzt orientiert sind.

3. Resonanter Konverter nach Anspruch 2, bei dem zwei Gruppen von Ausgangsspannungen geliefert werden, wobei jede Gruppe eine oder mehrere Ausgangsspannungen umfasst,
   von denen eine erste Gruppe von Ausgangsspannungen von einer oder mehrerer Sekundäreinheiten ersten Typs (20a) gespeist sind,
   und eine zweite Gruppe von Ausgangsspannungen entweder von einer oder mehreren Sekundäreinheiten zweiten Typs (20b) oder sowohl von Sekundäreinheiten ersten als auch zweiten Typs (20a, 20b) gespeist sind.

4. Resonanter Konverter nach Anspruch 3, bei dem die Regeleinrichtung (22) zur Regelung jeweils einer Ausgangsspannung der ersten und einer Ausgangsspannung der zweiten Gruppe auf einen Soll-Wert vorgesehen ist.

5. Resonanter Konverter nach einem der vorangehenden Ansprüche, bei dem die beiden Stellgrößen die Einschaltzeiten (tsH, tsL) für einen ersten und einen zweiten Spannungspuls sind, wobei der erste Spannungspuls positiv ist, und der zweite Spannungspuls Null oder negativ ist.

6. Resonanter Konverter nach einem der vorangehenden Ansprüche 1-4, bei dem die beiden Stellgrößen die Schaltfrequenz (f) und der Tastgrad ($\delta$) sind.

7. Resonanter Konverter nach Anspruch 6, bei dem die Regeleinrichtung (22, 60, 70) so ausgebildet ist, dass sie für die erste und die zweite zu regelnde Ausgangsspannung (Va, Vb; Va, Vab) eine erste und eine zweite Regelfehlergröße ($\Delta$a, $\Delta$b) ermittelt, und hieraus eine Summengröße ermittelt, die von der Summe der Regelfehlergrößen ($\Delta$a, $\Delta$b) abhängt, und eine Differenzgröße, die von der Differenz der Regelfehlergrößen ($\Delta$a, $\Delta$b) abhängt, wobei die Summengröße einem Regler (62) für die Frequenz (f) und die Differenzgröße einem Regler (64) für den Tastgrad ($\delta$) der pulsweitenmodulierten Spannung zugeführt wird.

8. Resonanter Konverter nach Anspruch 6, bei dem die Regeleinrichtung (22, 70) so ausgebildet ist, dass sie für die erste und die zweite zu regelnde Ausgangsspannung (Va, Vb; Va, Vab) eine erste und eine zweite Regelfehlergröße ($\Delta$a, $\Delta$b) ermittelt, wobei die erste Regelfehlergröße ($\Delta$a) einen Regler (74) für den Tastgrad ($\delta$) und die zweite Regelfehlergröße ($\Delta$b) einen Regler (72) für die Frequenz (f) der pulsweitenmodulierten Spannung zugeführt wird.

9. Resonanter Konverter nach Anspruch 5, bei dem die Regeleinrichtung (22, 80) so ausgebildet ist, dass sie für die erste und die zweite zu regelnde Ausgangsspannung (Va, Vb) eine erste und zweite Regelfehlergröße ermittelt, wobei aus der ersten Regelfehlergröße ein Vorgabewert für die Dauer (tsH) des ersten Spannungspulses der pulsweitenmodulierten Spannung ermittelt wird, und aus der zweiten Regelfehlergröße ein Vorgabewert für die Dauer (tsL) des zweiten Spannungspulses der pulsweitenmodulierten Spannung ermittelt wird.

10. Resonanter Konverter nach einem der Ansprüche 5 oder 9, bei dem die Regelschaltung als analoge Schaltung (90) realisiert ist, mit mindestens zwei Fehlereinheiten (96) zur Bildung von Fehlergrößensignalen (i1a, i1b) und mindestens einem Multivibrator (100) zur Erzeugung eines Pulssignals zur Steuerung des Wechselrichters (12) wobei abhängig von den Fehlergrößensignalen die Pulsdauer der Pulse der von dem Wechselrichter erzeugten pulsweitenmodulierten Spannung vorgegeben sind.

11. Regelverfahren für einen resonanten Konverter, wobei der Konverter (10, 30, 40) mindestens einen Wechselrichter (12) zur Erzeugung einer Wechselspannung mittels einer Halbbrücke oder einer Vollbrücke, mit der aus einer Eingangsgleichspannung durch wechselseitiges Schalten mindestens zweier Schalter Spannungspulse erzeugt werden, und eine durch die Wechselspannung gespeiste Resonanzanordnung (14) mit mindestens einer Serienkapazität (C) und mindestens der Primärseite eines Transformators (16) aufweist, und wobei mindestens zwei Sekundäreinheiten (20a, 20b) vorgesehen sind, gebildet jeweils mindestens aus einer Sekundärwicklung (18a, 18b) des Transformators und mindestens einem Gleichrichtelement (Da, Db), von denen eine erste Sekundäreinheit (20a) und eine zweite Sekundäreinheit (20b) entgegengesetzt orientiert sind, und wobei mindestens zwei Ausgangsspannungen (Va, Vb; Va, Vab) geliefert werden, von denen eine erste Ausgangsspannung (Va) von der ersten Sekundäreinheit (20a) und eine zweite Ausgangsspannung (Vb, Vab) entweder von der zweiten Sekundäreinheit (20b) oder von der ersten und der zweiten Sekundäreinheit (20a, 20b) geliefert wird, wobei zur getrennten Regelung der ersten und zweiten Ausgangsspannung (Va, Vb; Va, Vab) jeweils auf einen Soll-Wert (VAref, VBref; VAref, VABref) die Ansteuerung des Wechselrichters (12) in Abhängigkeit der ersten Ausgangsspannung (Va) und der zweiten Ausgangsspannung (Vb, Vab) vorgegeben wird, wobei der Wechselrichter (12) durch ein Pulssignal so angesteuert ist, dass eine pulsweitenmodulierte Spannung zur Speisung der Resonanzanordnung (14) geliefert wird, und wobei die Regelung (22) so ausgebildet ist, dass sie zwei Stellgrößen (f, $\delta$; tsH, tsL) zur Erzeugung des Pulssignals liefert, die den Zeitverlauf der pulsweitenmodulierten Spannung vorgeben.

12. Schaltnetzteil mit einer Netzteileingangsschaltung zum Anschluss an das Stromversorgungsnetz und zur Lieferung einer Zwischenkreisgleichspannung und einem resonanten Konverter nach einem der Ansprüche 1-10, der durch die Zwischenkreisgleichspannung gespeist ist.

**Claims**

1. A resonant converter comprising an inverter (12) for creating an alternating current by means of a half bridge or a full bridge, with which voltage pulses are created from a DC input voltage by alternate switching of at least two switches, and a resonant arrangement (14) fed by the alternating current with at least a series capacity (C) and at least the primary side of a transformer (16), whereby at least two secondary units (20a, 20b) are included, formed, in each case, from at least a secondary winding (18a, 18b) of the transformer (16) and at least one rectifier element (Da, Db), of which a first secondary unit (20a) and a second secondary unit (20b) are counter-oriented, and whereby at least two output voltages are delivered, of which a first output voltage (Va) is delivered by the first secondary unit (20a) and a second output voltage (Vb, Vab) is delivered either by the second secondary unit (20b) or by the first and the second secondary unit (20a, 20b), whereby, in addition, a control device (22) is included for separate control of the first and second output voltage (Va, Vb; Vab) in each case, at a setpoint (VAref, VBref; VAref, VABref) by activating the inverter (12) depending on the first output voltage (Va) and the second output voltage (Vb, Vab), whereby the inverter (12) is triggered by a pulse signal such that a pulse-width modulated voltage is delivered to feed the resonant arrangement (14), and whereby the control device (22) is designed such that it delivers two control variables (f, $\delta$: tsH, tsL) to create the pulse signal, which specify the time characteristics of the pulse-width modulated voltage.

2. A resonant converter according to claim 1, in which two types of secondary units (20a, 20b) are included, whereby the secondary units of a first type (20a) are counter-oriented to the secondary units of a second type (20b).

3. A resonant converter according to claim 2, in which two groups of output voltages are delivered, whereby each group comprises one or more output voltages, of which a first group of output voltages are supplied by one or more secondary units of the first type (20a), and a second group of output voltages are supplied either by one or more secondary units of the second type (20b) or both by secondary units of the first as well as the second type (20a, 20b).

4. A resonant converter according to claim 3, in which the control device (22) for controlling, in each case, an output voltage for the first and an output voltage for the second group at a setpoint.

5. A resonant converter according to one of the preceding claims, in which the two control variables are the activation times (tsH, tsL) for a first and a second voltage pulse, whereby the first voltage pulse is positive and the second voltage pulse is zero or negative.

6. A resonant converter according to one of the preceding claims 1-4, in which the two control variables are the switching frequency (f) and the duty cycle ($\delta$).

7. A resonant converter according to claim 6, in which the control device (22, 60, 70) is designed such that it determines a first and a second control fault variable ($\Delta a$, $\Delta b$) for the first and the second output voltage (Va, Vb; Va, Vab) to be controlled, and determines from this an overall variable, which depends on the sum of control fault variables ($\Delta a$, $\Delta b$), and a difference variable, which depends on the difference in control fault variables ($\Delta a$, $\Delta b$), whereby the overall variable is fed to a controller (62) for the frequency (f) and the difference variable is fed to a controller (64) for the duty cycle ($\delta$) of the pulse-width modulated voltage.

8. A resonant converter according to claim 6, in which the control device (22, 70) is designed such that it determines a first and a second control fault variable ($\Delta a$, $\Delta b$) for the first and the second output voltage (Va, Vb; Va, Vab) to be controlled, whereby the first control fault variable ($\Delta a$) is fed to a controller (74) for the duty cycle ($\delta$) and the second control fault variable ($\Delta b$) is fed to a controller (72) for the frequency (f) of the pulse-width modulated voltage.

9. A resonant converter according to claim 5, in which the control device (22, 80) is designed such that it it determines a first and a second control fault variable for the first and the second output voltage (Va, Vb) to be controlled, whereby a default value is determined, from the first control fault variable, for the duration (tsH) of the first voltage pulse of the pulse-width modulated voltage, and a default value is determined, from the second control fault variable, for the duration (tsL) of the second voltage pulse of the pulse-width modulated voltage.

10. A resonant converter according to claims 5 or 9, in which the control circuit is created as an analog circuit (90), with at least two fault units (96) to produce fault variable signals (ila, ilb) and at least one multivibrator (100) to create a pulse signal to control the inverter (12) whereby, depending on the fault variable signals, the pulse duration of the pulse of the pulse-width modulated voltage created by the inverter are specified.

11. A control method for a resonant converter, whereby the converter (10, 30, 40) comprises at least an inverter (12) to create analternating current by means of a half bridge or a full bridge, with which voltage pulses are created from a DC input voltage by alternate switching of at least two switches, and comprises a resonant arrangement (14) fed by the alternating current with at least a series capacity (C) and at least the primary side of a transformer (16), and whereby at least two secondary units (20a, 20b) are included, formed, in each case, from at least a secondary winding (18a, 18b) of the transformer and at least one rectifier element (Da, Db), of which a first secondary unit (20a) and a second secondary unit (20b) are counter-oriented, and whereby at least two output voltages (Va, Vb; Va, Vab) are delivered, of which a first output voltage (Va) is delivered by the first secondary unit (20a) and a second output voltage (Vb, Vab) is delivered either by the second secondary unit (20b) or by the first and the second secondary unit (20a, 20b), whereby, for separate control of the first and second output voltage (Va, Vb; Vab), in each case, at a setpoint (VAref, VBref; VAref, VABref) control of the inverter is specified (12) depending on the first output voltage (Va) and the second output voltage (Vb, Vab), whereby the inverter (12) is triggered by a pulse signal such that a pulse-width modulated voltage is delivered to feed the resonant arrangement (14), and whereby the control device (22) is designed such that it delivers two control variables (f, $\delta$: tsH, tsL) to create the pulse signal, which specify the time characteristics of the pulse-width modulated voltage.

12. A switching power supply comprising a power supply input circuit for connection to the power supply grid and for delivering a DC link and a resonant converter according to one of the claims 1-10, which is supplied by the DC link.

**Revendications**

1. Convertisseur résonnant avec un onduleur (12) pour la génération d'une tension alternative au moyen d'un demi-pont ou d'un pont intégral, avec lequel des impulsions de tension sont générées à partir d'une tension continue d'entrée par commutation réciproque d'au moins deux interrupteurs, et un agencement résonnant (14) alimenté par la tension alternative avec au moins une capacité de série (C) et au moins le côté primaire d'un transformateur (16), dans lequel au moins deux unités secondaires (20a, 20b) sont prévues, formées respectivement au moins à partir d'un enroulement secondaire (18a, 18b) du transformateur (16) et d'au moins un élément redresseur (Da, Db), desquelles une première unité secondaire (20a) et une deuxième unité secondaire (20b) sont orientées de manière opposée, et dans lequel au moins deux tensions de sortie sont fournies, desquelles une première tension de sortie (Va) est fournie par la première unité secondaire (20a) et une deuxième tension de sortie (Vb, Vab) est fournie soit par la deuxième unité secondaire (20b) soit par la première et la deuxième unité secondaire (20a, 20b), dans lequel en plus un dispositif de régulation (22) est prévu pour la régulation séparée de la première et deuxième tension de sortie (Va, Vb ; Vab) respectivement sur une valeur de consigne (VAref, VBred ; VAref, VABref) par commande de l'onduleur (12) en fonction de la première tension de sortie (Va) et de la deuxième tension de sortie (Vb, Vab), dans lequel l'onduleur (12) est commandé par un signal d'impulsion de telle sorte qu'une tension modulée en largeur d'impulsion est fournie pour l'alimentation de l'agencement résonnant (14), et dans lequel le dispositif de régulation (22) est réalisé de telle sorte qu'il fournit deux grandeurs de réglage (f, $\delta$ ; tsH, tsL) pour la génération du signal d'impulsion, qui prédéfinissent la courbe temporelle de la tension modulée en largeur d'impulsion.

2. Convertisseur résonnant selon la revendication 1, dans lequel deux types d'unités secondaires (20a, 20b) sont prévus, dans lequel les unités secondaires d'un premier type (20a) sont orientées de manière opposée aux unités secondaires d'un deuxième type (20b).

3. Convertisseur résonnant selon la revendication 2, dans lequel deux groupes de tensions de sortie sont fournies, dans lequel chaque groupe comprend une ou plusieurs tensions de sortie, desquels un premier groupe de tensions de sortie sont alimentées par une ou plusieurs unités secondaires du premier type (20a), et un deuxième groupe de tensions de sortie sont alimentées soit par une ou plusieurs unités secondaires du deuxième type (20b) soit aussi bien par des unités secondaires du premier que du deuxième type (20a, 20b).

4. Convertisseur résonnant selon la revendication 3, dans lequel le dispositif de régulation (22) est prévu pour la régulation de respectivement une tension de sortie du premier groupe et d'une tension de sortie du deuxième groupe sur une valeur de consigne.

5. Convertisseur résonnant selon l'une quelconque des revendications précédentes, dans lequel les deux grandeurs de réglage sont les temps d'activation (tsH, tsL) pour une première et une deuxième impulsion de tension, dans lequel la première impulsion de tension est positive, et la deuxième impulsion de tension est nulle ou négative.

6. Convertisseur résonnant selon l'une quelconque des revendications 1-4, dans lequel les deux grandeurs de réglage sont la fréquence de commutation (f) et le rapport cyclique ($\delta$).

7. Convertisseur résonnant selon la revendication 6, dans lequel le dispositif de régulation (22, 60, 70) est réalisé de telle sorte qu'il détermine pour la première et la deuxième tension de sortie à réguler (Va, Vb ; Va, Vab) une première et une deuxième grandeur d'erreur de régulation ($\Delta$a, $\Delta$b), et détermine une grandeur de somme à partir de là, qui dépend de la somme des grandeurs d'erreur de régulation ($\Delta$a, $\Delta$b), et une grandeur différentielle, qui dépend de la différence des grandeurs d'erreur de régulation ($\Delta$a, $\Delta$b), dans lequel la grandeur de somme est amenée à un régulateur (62) pour la fréquence (f) et la grandeur différentielle est amenée à un régulateur (64) pour le rapport cyclique ($\delta$) de la tension modulée en largeur d'impulsion.

8. Convertisseur résonnant selon la revendication 6, dans lequel le dispositif de régulation (22, 70) est réalisé de telle sorte qu'il détermine pour la première et la deuxième tension de sortie à réguler (Va, Vb ; Va, Vab) une première et une deuxième grandeur d'erreur de régulation ($\Delta$a, $\Delta$b), dans lequel la première grandeur d'erreur de régulation ($\Delta$a) est amenée à un régulateur (74) pour le rapport cyclique ($\delta$) et la deuxième grandeur d'erreur de régulation ($\Delta$b) est amenée à un régulateur (72) pour la fréquence (f) de la tension modulée en largeur d'impulsion.

9. Convertisseur résonnant selon la revendication 5, dans lequel le dispositif de régulation (22, 80) est réalisé de telle sorte qu'il détermine pour la première et la deuxième tension de sortie à réguler (Va, Vb) une première et deuxième grandeur d'erreur de régulation, dans lequel une valeur prédéfinie pour la durée (tsH) de la première impulsion de tension de la tension modulée en largeur d'impulsion est déterminée à partir de la première grandeur d'erreur de régulation,

et une valeur prédéfinie pour la durée (tsL) de la deuxième impulsion de tension de la tension modulée en largeur d'impulsion est déterminée à partir de la deuxième grandeur d'erreur de régulation.

10. Convertisseur résonnant selon l'une quelconque des revendications 5 ou 9, dans lequel le circuit de régulation est réalisé sous forme de circuit analogique (90), avec au moins deux unités d'erreur (96) pour la formation de signaux de grandeur d'erreur (ila, ilb) et au moins un multivibrateur (100) pour la génération d'un signal d'impulsion pour la commande de l'onduleur (12), dans lequel les durées d'impulsion des impulsions de la tension modulée en largeur d'impulsion générée par l'onduleur sont prédéfinies en fonction des signaux de grandeur d'erreur.

11. Procédé de régulation pour un convertisseur résonnant, dans lequel le convertisseur (10, 30, 40) présente au moins un onduleur (12) pour la génération d'une tension alternative au moyen d'un demi-pont ou d'un pont intégral, avec lequel des impulsions de tension sont générées à partir d'une tension continue d'entrée par commutation réciproque d'au moins deux interrupteurs, et un agencement résonnant (14) alimenté par la tension alternative avec au moins une capacité de série (C) et au moins le côté primaire d'un transformateur (16), et dans lequel au moins deux unités secondaires (20a, 20b) sont prévues, formées respectivement au moins à partir d'un enroulement secondaire (18a, 18b) du transformateur et d'au moins un élément redresseur (Da, Db), desquelles une première unité secondaire (20a) et une deuxième unité secondaire (20b) sont orientées de manière opposée, et dans lequel au moins deux tensions de sortie (Va, Vb ; Va, Vab) sont fournies, desquelles une première tension de sortie (Va) est fournie par la première unité secondaire (20a) et une deuxième tension de sortie (Vb, Vab) est fournie soit par la deuxième unité secondaire (20b) soit par la première et la deuxième unité secondaire (20a, 20b), dans lequel pour la régulation séparée de la première et deuxième tension de sortie (Va, Vb ; Va, Vab) respectivement sur une valeur de consigne (VAref, VBred ; VAref, VABref), la commande de l'onduleur (12) est prédéfinie en fonction de la première tension de sortie (Va) et de la deuxième tension de sortie (Vb, Vab), dans lequel l'onduleur (12) est commandé par un signal d'impulsion de telle sorte qu'une tension modulée en largeur d'impulsion est fournie pour l'alimentation de l'agencement résonnant (14), et dans lequel la régulation (22) est réalisée de telle sorte qu'elle fournit deux grandeurs de réglage (f, $\delta$ ; tsH, tsL) pour la génération du signal d'impulsion, qui prédéfinissent la courbe temporelle de la tension modulée en largeur d'impulsion.

12. Bloc d'alimentation et de commutation avec un circuit d'entrée de bloc d'alimentation pour le raccordement au réseau électrique et pour la fourniture d'une tension continue de circuit intermédiaire et un convertisseur résonnant selon l'une quelconque des revendications 1-10, qui est alimenté par la tension continue de circuit intermédiaire.

Fig.1

17

Fig.2

Fig.3

Fig.4a

Fig.4b

Fig.4c

Fig.5

Fig.5a

Fig.5b

Fig.6

Fig.7

Fig.8

Fig.9

EP 1 257 048 B1

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5619403 A

- WO 0069059 A

**In der Beschreibung aufgeführte Nicht-Patentliteratur**

- **VON J. SEBASTIAN.** A Complete Study of the Double Forward - Flyback Converter. *Eine entsprechende Topologie ist beispielsweise beschrieben in IEEE-PESC,* 1988, 142